# EUROPEAN PATENT SPECIFICATION

(11) **EP 3 515 098 B1**
(45) Date of publication and mention of the grant of the patent: **15.12.2021**
(21) Application number: 16917430.7
(22) Date of filing: 30.09.2016
(51) Int. Cl.: H04W 8/02, H04W 8/08, H04W 12/08

(54) **LOCAL SERVICE AUTHORIZATION METHOD AND RELATED DEVICE**
LOKALES DIENSTAUTORISIERUNGSVERFAHREN UND ZUGEHÖRIGE VORRICHTUNG
PROCÉDÉ D'AUTORISATION DE SERVICE LOCAL ET DISPOSITIF ASSOCIÉ

(43) Date of publication of application: 24.07.2019
(73) Proprietor: Huawei Technologies Co., Ltd., Longgang District Shenzhen, Guangdong 518129 (CN)
(72) Inventor: YU, Youyang, Shenzhen Guangdong 518129 (CN); JIN, Weisheng, Shenzhen Guangdong 518129 (CN)
(74) Representative: Isarpatent
(86) International application number: PCT/CN2016/101402
(87) International publication number: WO 2018/058680

(56) References cited:
- WO-A1-2014/107985
- CN-A- 101 064 937
- CN-A- 101 198 186
- CN-A- 101 299 881
- CN-A- 103 841 539
- CN-A- 104 349 297
- US-A1- 2011 225 632
- US-B2- 8 161 523

## Description

### TECHNICAL FIELD

The present invention relates to the field of communications technologies, and specifically, to methods for authorizing a local service and related devices.

### BACKGROUND

To meet a challenge of a wireless broadband technology and keep leading superiority of a 3rd Generation Partnership Project (3rd Generation Partnership Project, 3GPP) network, the 3GPP discussion group made a Long Term Evolution (Long Term Evolution, LTE) plan of a mobile communications network in 2004, and defined a new mobile communications network architecture, namely, an Evolved Packet System (Evolved Packet System, EPS), under the guidance of the plan. The EPS includes user equipment (User Equipment, UE), an access network, and an evolved packet core (Evolved Packet Core, EPC) network. In a roaming scenario, the UE may access a home operator EPC through a visited (subsequently referred to as local) network, and when there is a roaming agreement between an operator of the local network and the home operator or between a third-party service provider of the local network and the home operator, the home operator can authorize a local service.

It is found through practice that if there is no one-to-one roaming agreement between the operator (or the third-party service provider) of the local network to which the UE connects and the home operator, the home operator cannot authorize a local service of the local network. Consequently, the UE cannot use the local service.

This problem is also described/existing in the published patent prior art. For example, in conventional implementations such as in WO 2014/107 985 A1, a local network node does not forward to the home network an access request. The local network node which receives a request from a UE is a RAN node which contacts a core network node in order to contact the home network, as in disclosed in US 2011/225632 A1 and US 8 161 523 B2. In all aforementioned prior art documents, a roaming agreement exists between two networks. In such conventional implementations, in roaming scenarios, when a UE attempts to attach to a visited (local) network, the visited network accesses the home network and fetches the subscription information but only when there is a roaming agreement between the two networks. However, typically, e.g. a home PLMN would not allow any services to a local network to which there is no roaming agreement.

### SUMMARY

The object of the present invention is to provide methods for authorizing a local service and related devices, so that in a roaming scenario, when there is no direct roaming agreement (for example, a one-to-one roaming agreement) between a service provider of a local network and a home operator, the home operator can authorize a local service of the local network. This object is solved by the attached independent claims and further advantageous embodiments and improvements of the present invention are listed in the dependent claims. Hereinafter, before coming to a detailed description of the embodiments with reference to the attached drawings, some aspects of the invention are listed separately below and they contribute to the understanding of the invention. However, it should be noted that the invention is defined by the attached claims and any examples or aspects which are not covered by these claims should be also understood as simply supporting the understanding of the invention as defined in the claims.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an EPS architecture according to an embodiment of the present invention;
FIG. 2 is a schematic flowchart of a method for authorizing a local service according to an embodiment of the present invention;
FIG. 3A and FIG. 3B are a schematic flowchart of another method for authorizing a local service according to an embodiment of the present invention;
FIG. 4 is a schematic flowchart of still another method for authorizing a local service according to an embodiment of the present invention;
FIG. 5 is a schematic flowchart of still another method for authorizing a local service according to an embodiment of the present invention;
FIG. 6 is a schematic structural diagram of a home network device according to an embodiment of the present invention;
FIG. 7 is a schematic structural diagram of another home network device according to an embodiment of the present invention;
FIG. 8 is a schematic structural diagram of a local network device according to an embodiment of the present invention;
FIG. 9 is a schematic structural diagram of another local network device according to an embodiment of the present invention;
FIG. 10 is a schematic structural diagram of UE according to an embodiment of the present invention;
FIG. 11 is a schematic structural diagram of another UE according to an embodiment of the present invention; and
FIG. 12 is a schematic structural diagram of a system for authorizing a local service according to an embodiment of the present invention.

### DESCRIPTION OF EMBODIMENTS

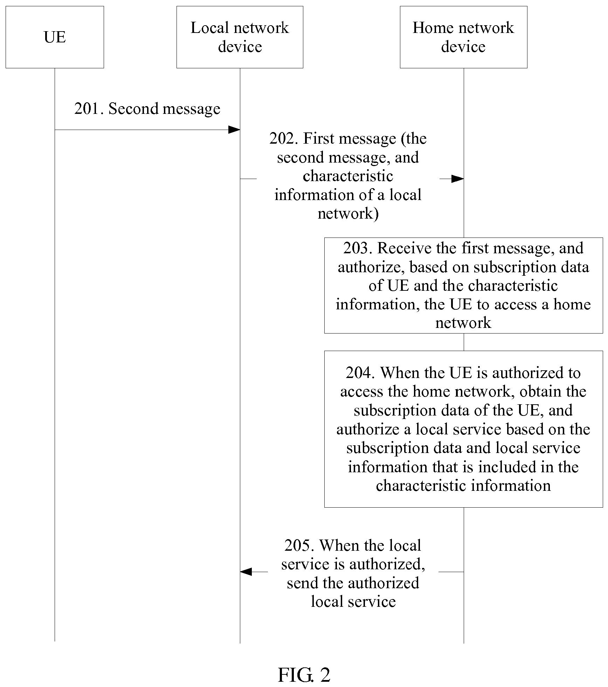

Although hereinafter the description several times refers to "embodiments", it should be noted that the actual embodiments of the present invention which specifically relate to the independent claims are those described in connection with FIG. 2, FIG. 3, FIG. 6, FIG. 7 and FIG. 8. All other references to embodiments are to be construed as examples useful for understanding the invention. All other embodiments obtained by a person of ordinary skill in the art based on the embodiments of the present invention without creative efforts shall fall within the protection scope of the present invention, as defined by the appended set of claims.

The embodiments of the present invention disclose a method for authorizing a local service, a related device, and a system, so that in a roaming scenario, when there is no one-to-one roaming agreement between an operator (or a third-party service provider) of a local network and a home operator, the home operator can authorize a local service. Details are separately described below.

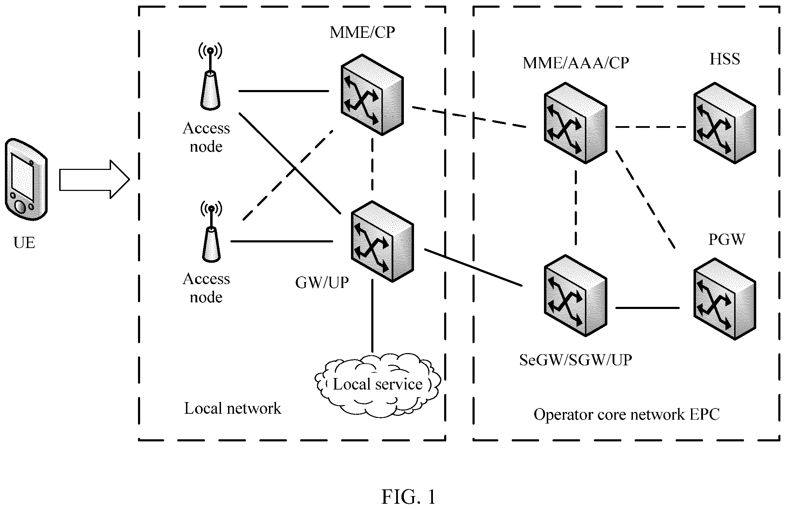

To better understand the method for authorizing a local service and the related device that are disclosed in the embodiments of the present invention, the following first describes an EPS architecture to which the embodiments of the present invention are applicable. FIG. 1 is a schematic diagram of an EPS architecture according to an embodiment of the present invention. The architecture shown in FIG. 1 includes UE, a local network, and an operator core network EPC. The UE may include a handheld device, an in-vehicle device, a wearable device, or a computing device that has a radio communication function; another processing device connected to a wireless modem; and user equipment in various forms, including a mobile station (Mobile Station, MS), a terminal (terminal), terminal equipment (Terminal Equipment), and the like. For ease of description, in the embodiments of the present invention, the devices mentioned above are collectively referred to as user equipment or UE.

The system architecture shown in FIG. 1 is applied to a roaming scenario. In FIG. 1, the local network may be alternatively referred to as a visited network, and may be a network deployed by a third party, or may be an operator network, and this is not limited in this embodiment of the present invention. The local network includes an access node such as a Long Term Evolution (Long Term Evolution, LTE) access node or an LTE-U access node, a control plane network element of the local network, and a user plane network element of the local network. The LTE access node is a base shown in FIG. 1, when there is no roaming agreement between the service provider of the local network and the home operator, the home operator can authorize the local service of the local network.

Based on the system architecture shown in FIG. 1, an embodiment of the present invention discloses a method for authorizing a local service. FIG. 2 is a schematic flowchart of a method for authorizing a local service according to an embodiment of the present invention. As shown in FIG. 2, the method for authorizing a local service may include the following steps.

201. UE sends a second message to a local network device.

In this embodiment of the present invention, the second message is specifically an access request message, and is used to request to access a home network of the UE. The access request message may be an attach request Attach Request message, an authentication and authorization request Authentication and Authorization Request message, a connection request message, a diameter message (for example, an Authentication and Authorization Request message) that is carried by using a NAS message (for example, an attach request message), or the like. This is not limited in this embodiment of the present invention.

In this embodiment of the present invention, when accessing the home network, the UE needs to send an attach request to the home network by using a local network. Specifically, the UE sends the attach request to an access node (which may use a licensed spectrum or an unlicensed spectrum) of the local network, and the access node forwards the attach request to a control plane network element of the local network.

In this embodiment of the present invention, the UE may further use an identifier of the home network, for example, a home public land mobile network (Home public land mobile network, HPLMN) identifier, as a selected network, and send the identifier of the home network to the local network device by using an air interface message, and specifically, the UE may send the identifier as an independent message, or may add the identifier to the second message and send the second message. This is not limited in this embodiment of the present invention.

Optionally, the second message may further include at least one of current location information and access point information of the UE, for example, geographical location information (longitude and latitude) of the UE, 3GPP location information, cellular network broadcast location information (for example, an identifier of an LTE base station) of an operator of the home network, an identifier of an accessed LTE-U cell, an identifier of an accessed LTE-U base station, or an identifier of an access point (for example, a "café access point" or an "airport access point") defined by the local network. This is not limited in this embodiment of the present invention.

202. The local network device receives the second message, and sends a first message to a home network device, where the first message includes characteristic information of a local network, and the first message carries the second message.

In this embodiment of the present invention, after receiving the second message from the UE, the local network device sends the second message and the characteristic information of the local network to the home network device based on the identifier of the home network. Specifically, the local network device sends the second message to a control plane network element such as an MME of the home network.

In this embodiment of the present invention, the characteristic information of the local network may include local service information of the local network. The local service information may include at least one of an identifier of a local service, a QoS parameter of the local service, and a charging policy of the local service. Optionally, the local service information may further include stream description information corresponding to the local service.

The identifier of the local service may include at least one of a type of the local service such as a data service, a voice service, an advertisement service, or an Internet service, an application identifier such as an application name, and an APN. This is not limited in this embodiment of the present invention. The QoS parameter may include a guaranteed bit rate (Guaranteed Bit Rate, GBR), a maximum bit rate (Maximum Bit Rate, MBR), a quality of service class identifier (QoS Class Identifier, QCI), an allocation and retention priority (Allocation and Retention Priority, ARP), and the like. The charging policy may include prepayment, postpayment, duration-based charging, traffic-based charging, or the like. The stream description information may be alternatively referred to as a quintuple, and may include at least one of a source/destination Internet Protocol (Internet Protocol, IP) address, a source/destination port number, and a protocol identifier.

It should be noted that if the home network device stores the local service information of the local network, the local network device needs to send only at least one of the identifier of the local service, the QoS parameter of the local service, the charging policy of the local service, and the stream description information corresponding to the local service. If the home network device does not store the local service information of the local network, the local network device needs to send at least the identifier of the local service and the stream description information corresponding to the local service.

203. The home network device receives the first message, and authorizes, based on subscription data of the UE and the characteristic information of the local network, the UE to access a home network.

In this embodiment of the present invention, the characteristic information of the local network may further include security authentication information used by the local network, for example, an identifier of a used security authentication scheme; a radio access technology (Radio Access Technologies, RAT) type used by the local network, for example, LTE-U or LTE; an access mode of an access node of the local network, for example, an open mode, a closed mode, or a mixed mode; a security level of the access node of the local network; and the like. This is not limited in this embodiment of the present invention.

In this embodiment of the present invention, after receiving the first message, the home network device authorizes, based on the subscription data of the UE, the UE to access the home network, for example, determines whether the UE is allowed to access the home network through the access node at a current time or in a current location, whether the access mode or security level of the access node meets a condition of allowing the UE to access the home network through the access node, whether the local network is a trusted network or an untrusted network, and whether the UE is allowed to access the home network through a trusted network or through an untrusted network. This is not limited in this embodiment of the present invention.

In this embodiment of the present invention, if all the foregoing conditions allow the UE to access the home network through the local network, it indicates that the UE is authorized to access the home network through the local network, in other words, the UE is successfully attached to the home network.

204. When the UE is authorized to access the home network, the home network device obtains the subscription data of the UE, and authorizes a local service of the local network based on the subscription data and local service information.

In this embodiment of the present invention, when the UE is authorized to access the home network through the local network, the home network device obtains the subscription data of the UE, and authorizes the local service of the local network based on the subscription data of the UE and the local service information.

In a feasible implementation, the characteristic information of the local network may further include a service provider identifier (Service Provider Identifier/Identity, SP ID) and/or a roaming consortium identifier of the local network, and a specific manner in which the home network device obtains the subscription data of the UE may be:
obtaining, by the home network device, the subscription data of the UE based on at least one of the service provider identifier and the roaming consortium identifier.

Specifically, when the home network device is a control plane network element, a specific manner in which the home network device obtains the subscription data of the UE based on the at least one of the service provider identifier and the roaming consortium identifier may be:
obtaining, by the control plane network element, the subscription data of the UE from an HSS, where the subscription data includes service information corresponding to the at least one of the service provider identifier and the roaming consortium identifier; or
when the home network device is an HSS, a specific manner in which the home network device obtains the subscription data of the UE based on the at least one of the service provider identifier and the roaming consortium identifier may be:
   obtaining, by the HSS, the subscription data of the UE from a local database, where the subscription data includes service information corresponding to the at least one of the service provider identifier and the roaming consortium identifier.

In this embodiment of the present invention, the subscription data of the UE includes, through extension, the service information that is supported by the service provider identifier and/or the roaming consortium identifier of the local network. Specifically, there is a binding relationship between the service provider identifier and/or the roaming consortium identifier and the service information. The service information includes at least one of an identifier of a service such as a service type (a data service, a voice service, an advertisement service, an Internet service, or the like) or an APN, a QoS parameter threshold condition (a GBR, an MBR, a QCI, or an ARP), and a charging policy (for example, prepayment, postpayment, duration-based charging, or traffic-based charging).

Therefore, if the home network device is the control plane network element, the control plane network element specifically obtains the subscription data of the UE from the HSS, or if the home network device is the HSS, the HSS specifically obtains the subscription data of the UE from the local database. This is not limited in this embodiment of the present invention.

It should be noted that the SP ID is an identifier of a service provider that deploys the local network, an identifier of an enterprise that deploys the local network, an infrastructure provider identifier, or even an identifier of a government department, or the like. A roaming consortium is a consortium that includes a plurality of service providers such as a service provider, a mobile operator, a fixed network operator, a Wi-Fi operator, an enterprise, an infrastructure provider, and a government department. Each consortium has a unique consortium identifier (Union ID), members in the consortium share the consortium identifier (Union ID), and networks deployed by service providers in a same roaming consortium can be shared.

In another feasible implementation, a specific manner in which the home network device authorizes the local service of the local network based on the subscription data of the UE and the local service information may be:
determining, by the home network device, whether the local service information matches the service information in the subscription data; and if the local service information matches the service information, determining that the local service is authorized; or if the local service information does not match the service information, determining that the local service fails to be authorized.

A specific manner in which the home network device determines whether the local service information matches the service information may include at least one of the following:
determining whether the identifier of the service includes the identifier of the local service; and if the identifier of the service includes the identifier of the local service, determining that the local service information matches the service information; or if the identifier of the service does not include the identifier of the local service, determining that the local service information does not match the service information;
determining whether the quality of service parameter of the local service meets the quality of service parameter threshold condition; and if the quality of service parameter meets the quality of service parameter threshold condition, determining that the local service information matches the service information; or if the quality of service parameter does not meet the quality of service parameter threshold condition, determining that the local service information does not match the service information; and
determining whether the charging policy of the local service matches the charging policy of the service; and if the charging policy of the local service matches the charging policy of the service, determining that the local service information matches the service information; or if the charging policy of the local service does not match the charging policy of the service, determining that the local service information does not match the service information.

During specific implementation, when the local network device does not send the local service information of the local network, the home network device may search the subscription data of the UE for the service information that is corresponding to the service provider identifier and/or the roaming consortium identifier of the local network, and if there is the service information, use a service in the service information as an authorized local service. When the local network device sends the local service information of the local network, if the subscription data of the UE includes service information that is corresponding to the service provider identifier and/or the roaming consortium identifier of the local network, the home network device may further determine whether the local service information matches the service information.

For example, the home network device may determine whether a local service type or an APN supported by the local network matches a service type or an APN that is allowed in the service information. Further, if the local service information includes the QoS parameter of the local service, the home network device may further determine whether the QoS parameter of the local service supported by the local network meets the QoS parameter threshold condition of the service in the service information. For example, when a GBR supported by the local network is greater than or equal to a GBR to which the UE subscribes, the local service is authorized. When an MBR supported by the local network is less than the GBR to which the UE subscribes, the local service fails to be authorized. Further, if the local service information includes the charging policy of the local service, the home network device may further determine whether the charging policy of the local service supported by the local network matches the charging policy of the service in the service information. If all the foregoing conditions show "matching", it is determined that the local service of the local network is authorized.

205. When the local service is authorized, the home network device sends an identifier of the authorized local service to the local network device.

During specific implementation, when the local service is authorized, the home network device may send the identifier of the authorized local service to the local network device, so that the local network device sets up a local service connection to the UE based on the identifier of the authorized local service when the UE initiates the local service. The identifier of the authorized local service may include but is not limited to a type of the local service, an application identifier, and an APN.

In still another feasible implementation, the method may further include the following operations:
generating, by the home network device, a local service selection policy based on the authorized local service, and sending the local service selection policy to the UE.

During specific implementation, when the local service of the local network is authorized, the home network device generates the local service selection policy based on the authorized local service, where the local service selection policy includes the identifier of the authorized local service (for example, the type of the local service, the APN, or the application identifier) and stream description information corresponding to the authorized local service.

The stream description information that is corresponding to the authorized local service and that is included in the local service selection policy may be understood as that the local network device sends the stream description information corresponding to the local service to the home network device, and after the local service is authorized, the home network device selects the stream description information corresponding to the authorized local service; or the subscription data of the UE includes the local service information of the local network, and after the local service is authorized, the home network device selects the stream description information corresponding to the authorized local service.

Optionally, the local service selection policy may further include an identifier of a GW corresponding to the authorized local service, and the like, and this is not limited in this embodiment of the present invention.

Further, after generating the local service selection policy, the home network device may send the local service selection policy to the UE. Specifically, the local service selection policy may be sent to the local network device, and the local network device forwards the local service selection policy to the UE; or the local service selection policy may be sent to a home network service device in the EPS, for example, an ANDSF server, and the ANDSF server forwards the local service selection policy to the UE; or the local service selection policy may be sent to the UE by using signaling. This is not limited in this embodiment of the present invention.

It can be learned that in the method described in FIG. 2, in a roaming scenario, if there is no one-to-one roaming agreement between a service provider of the local network and a home operator, for example, the service provider and the home operator may be in a same roaming consortium, when the UE accesses the home network through the local network, the home network device may learn the local service information of the local network, to authorize the local service based on the subscription data of the UE and the local service information, so that the UE can use a service of a visited location, to reduce load of the home network and improve network resource utilization. Certainly, this embodiment of the present invention may be further applied to a scenario in which there is a one-to-one roaming agreement between the service provider of the local network and the home operator. In this case, the home network device may authorize the local service based on whether subscription information that is corresponding to the identifier of the service provider of the local network or an identifier of a roaming consortium to which the service provider belongs is found in the subscription data of the UE.

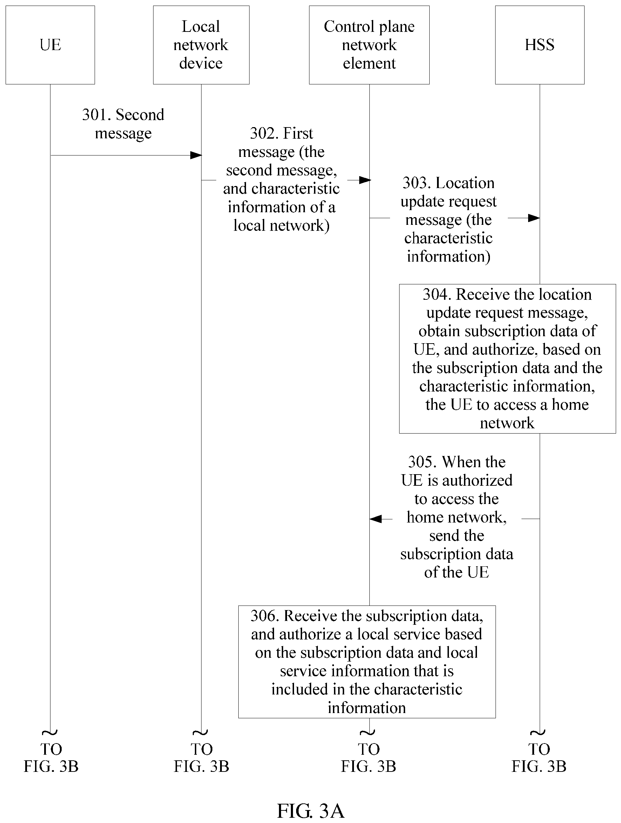

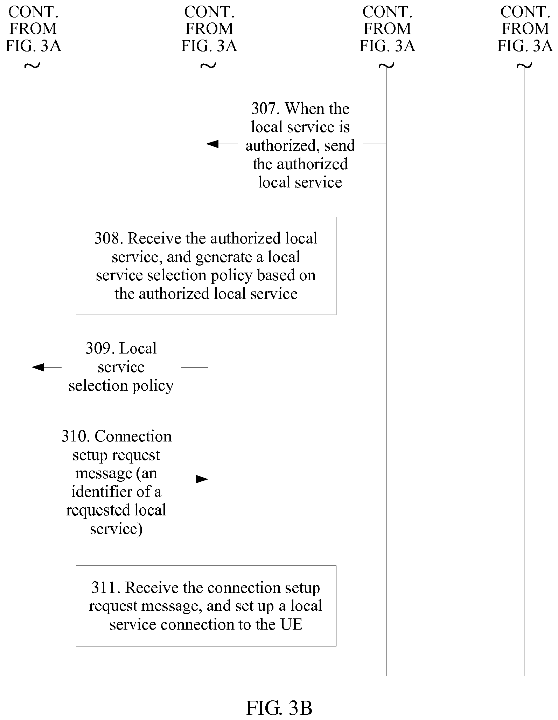

Based on the system architecture shown in FIG. 1, an embodiment of the present invention discloses another method for authorizing a local service. FIG. 3A and FIG. 3B are a schematic flowchart of another method for authorizing a local service according to an embodiment of the present invention. In the method embodiment shown in FIG. 3A and FIG. 3B, a local service selection policy is generated by a local network device. As shown in FIG. 3A and FIG. 3B, the method for authorizing a local service may include the following steps.

301. UE sends a second message to a local network device.

In this embodiment of the present invention, the second message is specifically an access request message, and is used to request to access a home network of the UE. The second message may further include a permanent identifier of the UE, for example, an international mobile subscriber identity (International Mobile Subscriber Identification Number, IMSI).

302. The local network device receives the second message, and sends a first message to a control plane network element, where the first message carries the second message, and the first message includes characteristic information of a local network.

In this embodiment of the present invention, a home network device includes a control plane network element such as an MME or an HSS of the home network. The characteristic information of the local network may include a service provider identifier and/or a roaming consortium identifier of the local network, and may further include local service information of the local network. The local service information may include at least one of an identifier of a local service, a QoS parameter of the local service, and a charging policy of the local service.

303. The control plane network element receives the first message, and sends a location update request message to an HSS.

In this embodiment of the present invention, after receiving the first message, the control plane network element may send the location update request message to the HSS, to update the control plane network element that provides a service for the UE, and obtain subscription data of the UE from the HSS. The service provider identifier and/or the roaming consortium identifier of the local network may be further sent to the HSS by using the location update request message.

Optionally, the characteristic information of the local network may further include security authentication information used by the local network, for example, an identifier of a used security authentication scheme; a RAT type used by the local network, for example, LTE-U or LTE; an access mode of an access node of the local network, for example, an open mode, a closed mode, or a mixed mode; a security level of the access node of the local network; and the like. This is not limited in this embodiment of the present invention. The control plane network element may further send the foregoing information to the HSS, so that the HSS authorizes, based on the subscription data of the UE for the first time, the UE to access the home network through the local network.

304. The HSS receives the location update request message, obtains subscription data of the UE, and authorizes, based on the subscription data and the characteristic information of the local network, the UE to access a home network.

In this embodiment of the present invention, after receiving the location update request message, the HSS updates the control plane network element (for example, the MME) that provides the service for the UE, and searches for the subscription data of the UE based on the IMSI of the UE. After finding the subscription data of the UE, the HSS authorizes, based on the subscription data, the UE to access the home network through the local network.

In this embodiment of the present invention, a specific manner in which the HSS authorizes, based on the subscription data of the UE, the UE to access the home network through the local network may be:
determining, by the HSS, whether the characteristic information of the local network matches the subscription data; and when the characteristic information matches the subscription data, allowing the UE to access the home network through the local network; or when the access information does not match the subscription data, rejecting access of the UE to the home network through the local network.

Specifically, the HSS detects, based on the RAT type used by the local network and the subscription data of the UE, whether the UE can perform access through the access node, and/or detects, based on the SP ID and/or the union ID, whether the UE can perform access through a network that is deployed by a service provider identified by the SP ID and/or a roaming consortium identified by the union ID.

305. When the UE is authorized to access the home network, the HSS sends the subscription data of the UE to the control plane network element.

In this embodiment of the present invention, when the HSS authorizes the UE to access the home network through the local network, the HSS may send the subscription data of the UE to the control plane network element. The subscription data includes service information that is corresponding to the SP ID and/or the union ID of the local network, and the service information includes related information of a service that the UE is allowed to use, for example, a service identifier, a QoS parameter threshold condition, and a service charging policy.

306. The control plane network element receives the subscription data of the UE, and authorizes a local service based on the subscription data and local service information.

In this embodiment of the present invention, after receiving the subscription data of the UE sent by the HSS, the control plane network element authorizes the UE again to access the home network through the local network, in other words, determines whether the UE is allowed to access the home network through the access node at a current time or in a current location, whether the access mode or the security level of the access node meets a condition of allowing the UE to access the home network through the access node, whether the local network is a trusted network or an untrusted network, whether the UE is allowed to access the home network through a trusted network or an untrusted network, and the like.

Further, when the control plane network element also authorizes the UE to access the home network through the local network, if the characteristic information includes the local service information of the local network, the control plane network element authorizes the local service based on the subscription data of the UE and the local service information of the local network. A specific manner is similar to that in the foregoing embodiment, and details are not described in this embodiment of the present invention again. If the characteristic information does not include the local service information of the local network, the control plane network element uses a service in subscription information as an authorized local service.

307. When the local service is authorized, the control plane network element sends an identifier of the authorized local service to the local network device.

In this embodiment of the present invention, when the local service of the local network is authorized, the control plane network element may send the identifier of the authorized local service, for example, a service type, an APN, and/or an application identifier, to the local network device.

308. The local network device receives the identifier of the authorized local service, and generates a local service selection policy based on the authorized local service.

After receiving the identifier of the authorized local service, the local network device stores a correspondence among the UE, the service provider identifier and/or the roaming consortium identifier of the local network, and the identifier of the authorized local service.

Further, the local network device further searches for stream description information corresponding to the authorized local service, and generates the local service selection policy of the UE based on the identifier of the authorized local service and the stream description information corresponding to the authorized local service.

Optionally, the local network device may further search for an identifier of a GW corresponding to the authorized local service, and generate the local service selection policy of the UE based on the identifier of the authorized local service, the stream description information corresponding to the authorized local service, and the identifier of the GW corresponding to the authorized local service.

309. The local network device sends the local service selection policy to the UE.

In this embodiment of the present invention, a specific manner in which the local network device sends the local service selection policy to the UE may be:
the control plane network element of the local network sends the local service selection policy of the UE to the access node, and the access node forwards the local service selection policy to the UE by using a radio air interface message; or a local network service device, for example, a local policy server, is disposed in the local network, the control plane network element of the local network sends the local service selection policy of the UE to the local policy server, and the local policy server forwards the local service selection policy to the UE, or the control plane network element of the local network directly sends the local service selection policy of the UE to the UE by using a NAS message.

310. The UE sends a connection setup request message to the local network device based on the local service selection policy, where the connection setup request message includes an identifier of a local service requested by the UE.

In this embodiment of the present invention, after receiving the local service selection policy, the UE may send the connection setup request message to the local network device based on the local service selection policy, and the connection setup request message includes the identifier of the local service requested by the UE.

Specifically, the UE determines the requested local service from the local service selection policy, and sends the connection setup request message to the local network device, and the connection setup request message includes the identifier of the requested local service. In this case, the local network device may set up a local service connection to the UE based on the identifier of the requested local service.

During specific implementation, the UE performs matching between stream description information of a local service that is to be initiated and stream description information in the local service selection policy, and performs matching between an identifier (a service type, an application identifier, or an APN) of the initiated local service and an application identifier in the local service selection policy. The UE selects an identifier of a local service corresponding to a successfully matched policy. The UE initiates the connection setup request message to the local network device, and the connection setup request message includes the identifier of the local service.

311. The local network device receives the connection setup request message, and sets up a local service connection to the UE.

In this embodiment of the present invention, after receiving the connection setup request message from the UE, the local network device may search, based on the stored correspondence among the UE, the service provider identifier and/or the roaming consortium identifier, and the identifier of the authorized local service, for the identifier of the authorized local service that is of the local network and that corresponds to the UE, to determine whether the identifier of the authorized local service of the local network includes the identifier of the local service requested by the UE. If the identifier of the authorized local service includes the identifier of the local service requested by the UE, the local network device sets up the local service connection to the UE.

In a feasible implementation, when the local service selection policy further includes the identifier of the GW corresponding to the authorized local service, the UE determines, from the local service selection policy, the requested local service and a serving gateway corresponding to the requested local service, to send the connection setup request message to the serving gateway corresponding to the requested local service. In this case, the serving gateway sets up a secure channel connection to the UE based on the connection setup request message, and after successfully setting up the secure channel connection, provides a service of the requested local service for the UE.

Specifically, the UE may perform matching between the stream description information of the local service that is to be initiated and the stream description information in the local service selection policy, and performs matching between the identifier (the service type, the application identifier, or the APN) of the initiated local service and the application identifier in the local service selection policy. The UE selects an identifier of a GW of a local network corresponding to the successfully matched policy. The UE initiates the connection setup request message to the GW of the local network based on the identifier of the GW of the local network. The GW of the local network sets up a secure channel connection (for example, an IPSec tunnel) to the UE, and provides a service of the local service.

Further, when a plurality of local services share a same serving gateway, when sending the connection setup request message, the UE may specifically send the identifier of the local service to the GW of the local network.

It can be learned that in the method described in FIG. 3A and FIG. 3B, in a roaming scenario, if there is no one-to-one roaming agreement between a service provider of the local network and a home operator, for example, the service provider and the home operator may be in a same roaming consortium, when the UE accesses the home network through the local network, the control plane network element may authorize the local service based on the subscription data of the UE and the local service information of the local network when the HSS and the control plane network element authorize the UE to access the home network, so that the UE can use a service of a visited location, to reduce load of the home network and improve network resource utilization. Further, the control plane network element sends the identifier of the authorized local service to the local network device, and the local network device generates the local service selection policy and sends the local service selection policy to the UE, so that the UE initiates the local service in a targeted manner, to avoid unnecessary information sending and improve communication resource utilization.

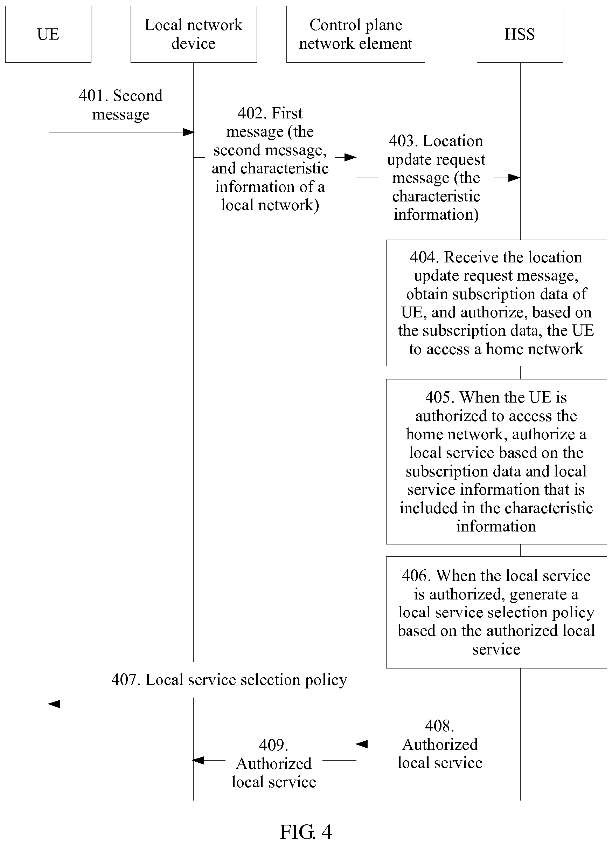

Based on the system architecture shown in FIG. 1, an embodiment of the present invention discloses still another method for authorizing a local service. FIG. 4 is a schematic flowchart of still another method for authorizing a local service according to an embodiment of the present invention. In the method embodiment shown in FIG. 4, a local service selection policy is generated by an HSS. As shown in FIG. 4, the method for authorizing a local service may include the following steps.

401. UE sends a second message to a local network device.

In this embodiment of the present invention, the second message is specifically an access request message, and is used to request to access a home network of the UE.

402. The local network device receives the second message, and sends a first message to a control plane network element, where the first message carries the second message, and the first message includes characteristic information of a local network.

In this embodiment of the present invention, a home network device includes a control plane network element such as an MME or an HSS of the home network. The characteristic information of the local network may include a service provider identifier and/or a roaming consortium identifier of the local network, and may further include local service information of the local network. The local service information may include at least one of an identifier of a local service, a QoS parameter of the local service, a charging policy of the local service, and stream description information corresponding to the local service.

403. The control plane network element receives the first message, and sends a location update request message to an HSS.

The location update request message may further include the local service information.

404. The HSS receives the location update request message, obtains subscription data of the UE, and authorizes, based on the subscription data and the characteristic information of the local network, the UE to access a home network.

405. When the UE is authorized to access the home network, the HSS authorizes a local service based on the subscription data and local service information.

In this embodiment of the present invention, when the UE is authorized to access the home network through the local network, the HSS may authorize the local service based on the subscription data of the UE and the local service information of the local network. A specific manner is similar to that in the foregoing embodiment, and details are not described in this embodiment of the present invention again.

406. When the local service is authorized, the HSS generates a local service selection policy based on the authorized local service.

407. The HSS sends the local service selection policy to the UE.

In this embodiment of the present invention, after generating the local service selection policy, the HSS may send the local service selection policy to the UE. Specifically, the local service selection policy may be sent to the control plane network element, the control plane network element sends the local service selection policy to the local network device, and the local network device forwards the local service selection policy to the UE; or the local service selection policy may be sent to a home network service device in an EPS, for example, an ANDSF server, and the home network service device forwards the local service selection policy to the UE. This is not limited in this embodiment of the present invention.

408. The HSS sends an identifier of the authorized local service to the control plane network element.

409. The control plane network element receives the identifier of the authorized local service, and sends the identifier of the authorized local service to the local network device.

In this embodiment of the present invention, after the local service of the local network is authorized, the HSS may send the identifier of the authorized local service, for example, a service type, an application name, and/or an APN, to the control plane network element, and the control plane network element forwards the identifier of the authorized local service to the local network device. The local network device stores a correspondence among the UE, the service provider identifier and/or the roaming consortium identifier, and the identifier of the authorized local service, so that when the UE subsequently initiates a local service, the service is authorized based on the stored correspondence, and a local service connection is set up to the UE after the authorization.

It can be learned that in the method described in FIG. 4, in a roaming scenario, if there is no one-to-one roaming agreement between a service provider of the local network and a home operator, for example, the service provider and the home operator may be in a same roaming consortium, when the UE accesses the home network through the local network, the HSS may authorize the local service based on the subscription data of the UE and the local service information of the local network when the UE is authorized to access the home network, so that the UE can use a service of a visited location, to reduce load of the home network and improve network resource utilization. Further, the HSS generates the local service selection policy based on the authorized local service, and sends the local service selection policy to the UE, so that the UE can initiate the local service, to avoid unnecessary information sending and improve communication resource utilization.

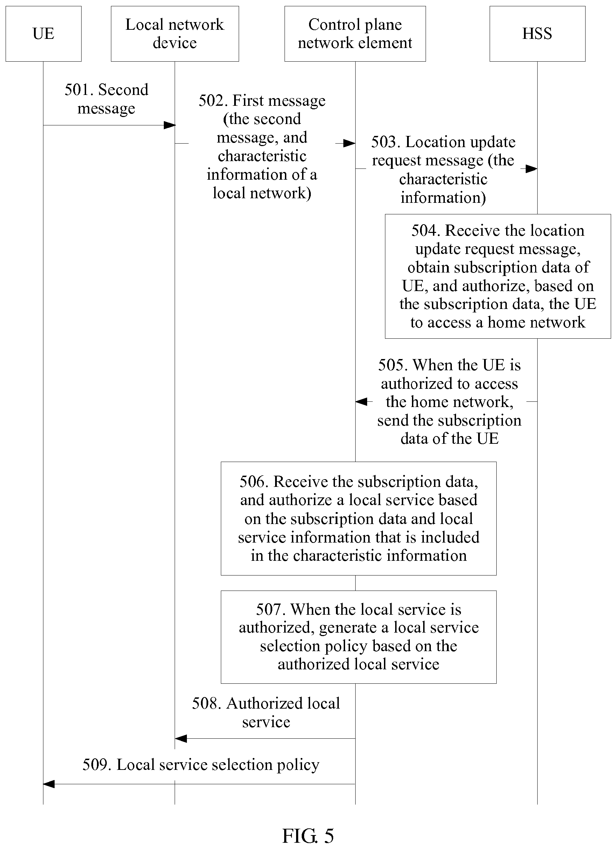

Based on the system architecture shown in FIG. 1, an embodiment of the present invention discloses still another method for authorizing a local service. FIG. 5 is a schematic flowchart of still another method for authorizing a local service according to an embodiment of the present invention. In the method embodiment shown in FIG. 5, a local service selection policy is generated by a control plane network element. As shown in FIG. 5, the method for authorizing a local service may include the following steps.

501. UE sends a second message to a local network device.

502. The local network device receives the second message, and sends a first message to a control plane network element, where the first message carries the second message, and the first message includes characteristic information of a local network.

In this embodiment of the present invention, a home network device includes a control plane network element such as an MME or an HSS of a home network. The characteristic information of the local network may include a service provider identifier and/or a roaming consortium identifier of the local network, and may further include local service information of the local network. The local service information may include at least one of an identifier of a local service, a QoS parameter of the local service, a charging policy of the local service, and stream description information of the local service.

503. The control plane network element receives the first message, and sends a location update request message to an HSS.

504. The HSS receives the location update request message, obtains subscription data of the UE, and authorizes, based on the subscription data and the characteristic information of the local network, the UE to access a home network.

505. When the UE is authorized to access the home network, the HSS sends the subscription data to the control plane network element.

506. The control plane network element authorizes a local service based on the subscription data and local service information.

507. When the local service is authorized, the control plane network element generates a local service selection policy based on the authorized local service.

508. The control plane network element sends an identifier of the authorized local service to the local network device.

In this embodiment of the present invention, after the local service of the local network is authorized, the control plane network element may send the identifier of the authorized local service, for example, a service type, an application name, and/or an APN, to the local network device, and the local network device stores a correspondence among the UE, the service provider identifier and/or the roaming consortium identifier, and the identifier of the authorized local service, so that when the UE subsequently initiates a local service, the service is authorized based on the stored correspondence, and a local service connection is set up to the UE after the authorization.

509. The control plane network element sends the local service selection policy to the UE.

In this embodiment of the present invention, after generating the local service selection policy, the control plane network element may send the local service selection policy to the UE. Specifically, the local service selection policy may be sent to the local network device, and the local network device forwards the local service selection policy to the UE; or the local service selection policy may be sent to a home network service device in an EPS, for example, an ANDSF server, and the home network service device forwards the local service selection policy to the UE. This is not limited in this embodiment of the present invention.

It can be learned that in the method described in FIG. 5, in a roaming scenario, if there is no one-to-one roaming agreement between a service provider of the local network and a home operator, for example, the service provider and the home operator may be in a same roaming consortium, when the UE accesses the home network through the local network, the control plane network element may authorize the local service based on the subscription data of the UE and the local service information of the local network when the HSS and the control plane network element authorize the UE to access the home network, so that the UE can use a service of a visited location, to reduce load of the home network and improve network resource utilization. Further, the control plane network element generates the local service selection policy based on the authorized local service, and sends the local service selection policy to the UE, so that the UE can initiate the local service, to avoid unnecessary information sending and improve communication resource utilization.

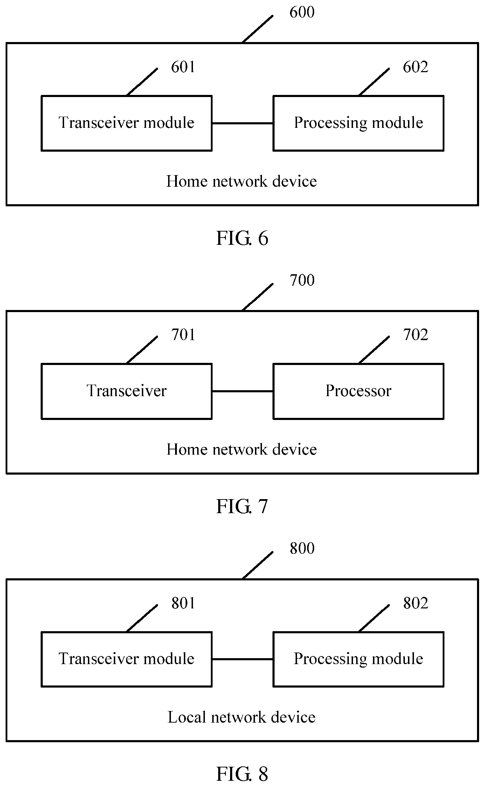

Based on the system architecture shown in FIG. 1, an embodiment of the present invention discloses a home network device. FIG. 6 is a schematic structural diagram of a home network device according to an embodiment of the present invention. A home network device 600 described in FIG. 6 may be applied to the foregoing method embodiments. As shown in FIG. 6, the home network device 600 may include a transceiver module 601 and a processing module 602.

The transceiver module 601 is configured to receive a first message sent by a local network device. The first message includes characteristic information of a local network, and the characteristic information includes local service information.

The processing module 602 is configured to: obtain subscription data of UE, and authorize a local service based on the subscription data and the local service information.

The transceiver module 601 is further configured to send an identifier of the authorized local service to the local network device, so that the local network device sets up a local service connection to the UE based on the identifier of the authorized local service when the UE initiates the local service.

In a feasible implementation, the characteristic information may further include at least one of a service provider identifier and a roaming consortium identifier of the local network, and a specific manner in which the processing module 602 obtains the subscription data of the UE may be:
obtaining the subscription data of the UE based on the at least one of the service provider identifier and the roaming consortium identifier.

Specifically, when the home network device 600 is a control plane network element, a specific manner in which the processing module 602 obtains the subscription data of the UE based on the at least one of the service provider identifier and the roaming consortium identifier may be:
obtaining the subscription data of the UE from an HSS, where the subscription data includes service information corresponding to the at least one of the service provider identifier and the roaming consortium identifier.

When the home network device 600 is an HSS, a specific manner in which the processing module 602 obtains the subscription data of the UE based on the at least one of the service provider identifier and the roaming consortium identifier may be:
obtaining the subscription data of the UE from a local database, where the subscription data includes service information corresponding to the at least one of the service provider identifier and the roaming consortium identifier.

In another feasible implementation, a specific manner in which the processing module 602 authorizes the local service based on the subscription data of the UE and the local service information may be:
determining whether the local service information matches the service information; and if the local service information matches the service information, determining that the local service is authorized; or if the local service information does not match the service information, determining that the local service fails to be authorized.

In still another feasible implementation, the service information may include at least one of an identifier of a service, a quality of service parameter threshold condition, and a charging policy of the service; and the local service information may include at least one of an identifier of the local service, a quality of service parameter of the local service, and a charging policy of the local service.

A specific manner in which the processing module 602 determines whether the local service information matches the service information may be at least one of the following:
determining whether the identifier of the service includes the identifier of the local service; and if the identifier of the service includes the identifier of the local service, determining that the local service information matches the service information; or if the identifier of the service does not include the identifier of the local service, determining that the local service information does not match the service information;
determining whether the QoS parameter of the local service meets the QoS parameter threshold condition; and if the QoS parameter meets the QoS parameter threshold condition, determining that the local service information matches the service information; or if the QoS parameter does not meet the QoS parameter threshold condition, determining that the local service information does not match the service information; and
determining whether the charging policy of the local service matches the charging policy of the service; and if the charging policy of the local service matches the charging policy of the service, determining that the local service information matches the service information; or if the charging policy of the local service does not match the charging policy of the service, determining that the local service information does not match the service information.

The subscription data of the UE includes, through extension, the service information that is corresponding to the service provider identifier and/or the roaming consortium identifier, and the home network device 600 obtains the corresponding service information based on the service provider identifier and/or the roaming consortium identifier, so that the home network device can authorize the local service based on the service information and the local service information of the local network, and the UE can use the local service when there is no one-to-one roaming agreement between a service provider of the local network and a home operator.

The local service information may further include stream description information corresponding to the local service.

It should be noted that if the home network device 600 stores the local service information of the local network, the local network device needs to send only at least one of the identifier of the local service, the QoS parameter corresponding to the local service, the charging policy corresponding to the local service, and the stream description information corresponding to the local service. If the home network device 600 does not store the local service information of the local network, the local network device needs to send at least the identifier of the local service and the stream description information corresponding to the local service.

In still another feasible implementation, the processing module 602 is further configured to generate a local service selection policy based on the authorized local service.

The transceiver module 601 is further configured to send the local service selection policy to the UE, so that the UE initiates the local service based on the local service selection policy.

The local service selection policy may include the identifier of the authorized local service and stream description information corresponding to the authorized local service.

It should be noted that if the home network device 600 does not store the local service information of the local network, and the local service information sent by the local network device does not include the stream description information corresponding to the local service, when the local service of the local network is authorized by the processing module 602 of the home network device 600, the transceiver module 601 sends only the identifier of the authorized local service to the local network device, and the local network device generates the local service selection policy and sends the local service selection policy to the UE.

During specific implementation, a specific manner in which the transceiver module 601 sends the local service selection policy to the UE may be:
sending, by the transceiver module 601, the local service selection policy to the local network device, so that the local network device forwards the local service selection policy to the UE; or sending, by the transceiver module 601, the local service selection policy to a home network service device in an EPS, for example, an ANDSF server, so that the ANDSF server forwards the local service selection policy to the UE; or sending, by the transceiver module 601, the local service selection policy to the UE by using signaling.

Further, the home network device 600 may include a control plane network element and an HSS of a home network. When the home network device 600 authorizes the UE to access the home network, a manner in which the home network device authorizes the local service may be: authorizing, by the HSS, the local service based on the subscription data of the UE and the local service information of the local network, and generating a local service policy; or may be: obtaining, by the control plane network element, the subscription data of the UE from the HSS, authorizing the local service based on the subscription data and the local service information of the local network, and generating a local service policy. This is not limited in this embodiment of the present invention.

In still another feasible implementation, the first message carries a second message, to request the UE to access the home network of the UE, and the second message is an access request message. The processing module 602 is further configured to authorize, based on the second message and the characteristic information of the local network, the UE to access the home network.

Therefore, the processing module 602 obtains the subscription data of the UE when the UE is authorized to access the home network.

Based on the system architecture shown in FIG. 1, an embodiment of the present invention discloses another home network device. FIG. 7 is a schematic structural diagram of another home network device according to an embodiment of the present invention. A home network device 700 described in FIG. 7 may be applied to the foregoing method embodiments. As shown in FIG. 7, the home network device 700 may include a transceiver 701 and a processor 702.

The transceiver 701 is configured to receive a first message sent by a local network device. The first message includes characteristic information of a local network, and the characteristic information includes local service information.

The processor 702 is configured to: obtain subscription data of UE, and authorize a local service based on the subscription data and the local service information.

The transceiver 701 is further configured to send an identifier of the authorized local service to the local network device, so that the local network device sets up a local service connection to the UE based on the identifier of the authorized local service when the UE initiates the local service.

In a feasible implementation, the characteristic information may further include at least one of a service provider identifier and a roaming consortium identifier of the local network, and a specific manner in which the processor 702 obtains the subscription data of the UE may be:
obtaining the subscription data of the UE based on the at least one of the service provider identifier and the roaming consortium identifier.

Specifically, when the home network device 700 is a control plane network element, a specific manner in which the processor 702 obtains the subscription data of the UE based on the at least one of the service provider identifier and the roaming consortium identifier may be:
obtaining the subscription data of the UE from an HSS, where the subscription data includes service information corresponding to the at least one of the service provider identifier and the roaming consortium identifier.

When the home network device 700 is an HSS, a specific manner in which the processor 702 obtains the subscription data of the UE based on the at least one of the service provider identifier and the roaming consortium identifier may be:
obtaining the subscription data of the UE from a local database, where the subscription data includes service information corresponding to the at least one of the service provider identifier and the roaming consortium identifier.

In another feasible implementation, a specific manner in which the processor 702 authorizes the local service based on the subscription data of the UE and the local service information may be:
determining whether the local service information matches the service information; and if the local service information matches the service information, determining that the local service is authorized; or if the local service information does not match the service information, determining that the local service fails to be authorized.

In still another feasible implementation, the service information may include at least one of an identifier of a service, a quality of service parameter threshold condition, and a charging policy of the service; and the local service information may include at least one of an identifier of the local service, a quality of service parameter of the local service, and a charging policy of the local service.

A specific manner in which the processor 702 determines whether the local service information matches the service information may be at least one of the following:
determining whether the identifier of the service includes the identifier of the local service; and if the identifier of the service includes the identifier of the local service, determining that the local service information matches the service information; or if the identifier of the service does not include the identifier of the local service, determining that the local service information does not match the service information;
determining whether the QoS parameter of the local service meets the QoS parameter threshold condition; and if the QoS parameter meets the QoS parameter threshold condition, determining that the local service information matches the service information; or if the QoS parameter does not meet the QoS parameter threshold condition, determining that the local service information does not match the service information; and
determining whether the charging policy of the local service matches the charging policy of the service; and if the charging policy of the local service matches the charging policy of the service, determining that the local service information matches the service information; or if the charging policy of the local service does not match the charging policy of the service, determining that the local service information does not match the service information.

The subscription data of the UE includes, through extension, the service information that is corresponding to the service provider identifier and/or the roaming consortium identifier, and the home network device 700 obtains the corresponding service information based on the service provider identifier and/or the roaming consortium identifier, so that the home network device can authorize the local service based on the service information and the local service information of the local network, and the UE can use the local service when there is no one-to-one roaming agreement between a service provider of the local network and a home operator.

The local service information may further include stream description information corresponding to the local service.

It should be noted that if the home network device 700 stores the local service information of the local network, the local network device needs to send only at least one of the identifier of the local service, the QoS parameter corresponding to the local service, the charging policy corresponding to the local service, and the stream description information corresponding to the local service. If the home network device 700 does not store the local service information of the local network, the local network device needs to send at least the identifier of the local service and the stream description information corresponding to the local service.

In still another feasible implementation, the processor 702 is further configured to generate a local service selection policy based on the authorized local service.

The transceiver 701 is further configured to send the local service selection policy to the UE, so that the UE initiates the local service based on the local service selection policy.

The local service selection policy includes the identifier of the authorized local service and stream description information corresponding to the authorized local service.

It should be noted that if the home network device 700 does not store the local service information of the local network, and the local service information sent by the local network device does not include the stream description information corresponding to the local service, when the local service of the local network is authorized by the processor 702 of the home network device 700, the transceiver 701 sends only the identifier of the authorized local service to the local network device, and the local network device generates the local service selection policy and sends the local service selection policy to the UE.

During specific implementation, a specific manner in which the transceiver 701 sends the local service selection policy to the UE may be:
sending, by the transceiver 701, the local service selection policy to the local network device, so that the local network device forwards the local service selection policy to the UE; or sending, by the transceiver 701, the local service selection policy to a home network service device in an EPS, for example, an ANDSF server, so that the ANDSF server forwards the local service selection policy to the UE; or sending, by the transceiver 701, the local service selection policy to the UE by using signaling.

Further, the home network device 700 may include a control plane network element and an HSS of a home network. When the home network device 700 authorizes the UE to access the home network, a manner in which the home network device authorizes the local service may be: authorizing, by the HSS, the local service based on the subscription data of the UE and the local service information of the local network, and generating a local service policy; or may be: obtaining, by the control plane network element, the subscription data of the UE from the HSS, authorizing the local service based on the subscription data and the local service information of the local network, and generating a local service policy. This is not limited in this embodiment of the present invention.

In still another feasible implementation, the first message carries a second message, to request the UE to access the home network of the UE, and the second message is an access request message. The processor 702 is further configured to authorize, based on the second message and the characteristic information of the local network, the UE to access the home network.

Therefore, the processor 702 obtains the subscription data of the UE when the UE is authorized to access the home network.

It can be learned that in the home network device described in FIG. 6 and FIG. 7, in a roaming scenario, if there is no one-to-one roaming agreement between the service provider of the local network and the home operator, for example, the service provider and the home operator may be in a same roaming consortium, when the UE accesses the home network through the local network, the home network device may authorize the local service based on the subscription data of the UE and the local service information of the local network when the UE is authorized to access the home network, so that the UE can use a service of a visited location, to reduce load of the home network and improve network resource utilization. Further, the home network device generates the local service selection policy based on the authorized local service, and sends the local service selection policy to the UE, so that the UE can initiate the local service, to avoid unnecessary information sending and improve communication resource utilization.

Based on the system architecture shown in FIG. 1, an embodiment of the present invention discloses a local network device. FIG. 8 is a schematic structural diagram of a local network device according to an embodiment of the present invention. A local network device 800 described in FIG. 8 may be applied to the foregoing method embodiments. As shown in FIG. 8, the local network device 800 may include a transceiver module 801 and a processing module 802.

The transceiver module 801 is configured to send a first message to a home network device, where the first message includes characteristic information of a local network, and the characteristic information includes local service information.

The transceiver module 801 is further configured to receive an identifier of an authorized local service, where the identifier of the authorized local service is sent to the local network device 800 when the local service is authorized by the home network device based on subscription data of UE and the local service information.

The processing module 802 is configured to set up a local service connection to the UE based on the identifier of the authorized local service when the UE initiates the local service.

The local service information may include at least one of an identifier of the local service, a QoS parameter corresponding to the local service, and a charging policy corresponding to the local service.

Optionally, the local service information may further include stream description information corresponding to the local service.

It should be noted that if the home network device stores the local service information of the local network, the local network device 800 needs to send only at least one of the identifier of the local service, the QoS parameter corresponding to the local service, the charging policy corresponding to the local service, and the stream description information corresponding to the local service. If the home network device does not store the local service information of the local network, the local network device 800 needs to send at least the identifier of the local service and the stream description information corresponding to the local service.

In a feasible implementation, the transceiver module 801 is further configured to: receive a local service selection policy that is generated based on the authorized local service and that is sent by the home network device, and send the local service selection policy to the UE; or
the processing module 802 is further configured to generate a local service selection policy based on the authorized local service, and
the transceiver module 801 is further configured to send the local service selection policy to the UE.

The local service selection policy may include the identifier of the authorized local service and stream description information corresponding to the authorized local service.

In another feasible implementation, a specific manner in which the transceiver module 801 sends the local service selection policy to the UE may be:
sending the local service selection policy to a local network service device, for example, a local policy server, so that the local network service device forwards the local service selection policy to the UE; or sending the local service selection policy of the UE to an access node, so that the access node forwards the local service selection policy to the UE by using a radio air interface message; or directly sending the local service selection policy of the UE to the UE by using a NAS message.

Optionally, if the local service selection policy is generated by the home network device, after receiving the identifier of the authorized local service of the local network, the local network device 800 may store only a correspondence among the UE, a service provider identifier and/or a roaming consortium identifier, and the identifier of the authorized local service.

In a still another feasible implementation, the transceiver module 801 is further configured to receive a second message sent by the UE, and the second message is used to request the UE to access a home network of the UE.

A specific manner in which the transceiver module 801 sends the first message to the home network device is:
sending the first message to the home network device, where the first message carries the second message, so that the home network device authorizes, based on the second message and the characteristic information of the local network, the UE to access the home network.

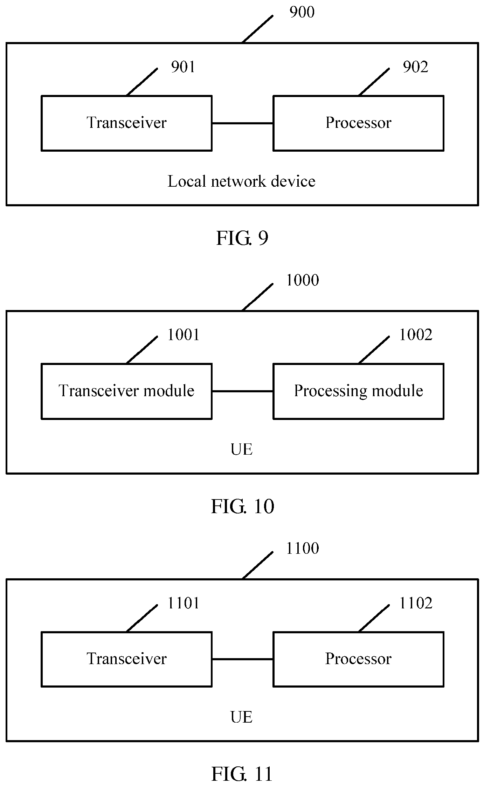

Based on the system architecture shown in FIG. 1, an embodiment of the present invention discloses another local network device. FIG. 9 is a schematic structural diagram of another local network device according to an embodiment of the present invention. A local network device 900 described in FIG. 9 may be applied to the foregoing method embodiments. As shown in FIG. 9, the local network device 900 may include a transceiver 901 and a processor 902.

The transceiver 901 is configured to send a first message to a home network device, where the first message includes characteristic information of a local network, and the characteristic information includes local service information.

The transceiver 901 is further configured to receive an identifier of an authorized local service, where the identifier of the authorized local service is sent to the local network device 900 when the local service is authorized by the home network device based on subscription data of UE and the local service information.

The processor 902 is configured to set up a local service connection to the UE based on the identifier of the authorized local service when the UE initiates the local service.

The local service information may include at least one of an identifier of the local service, a QoS parameter corresponding to the local service, and a charging policy corresponding to the local service.

Optionally, the local service information may further include stream description information corresponding to the local service.

It should be noted that if the home network device stores the local service information of the local network, the local network device 900 needs to send only at least one of the identifier of the local service, the QoS parameter corresponding to the local service, the charging policy corresponding to the local service, and the stream description information corresponding to the local service. If the home network device does not store the local service information of the local network, the local network device 900 needs to send at least the identifier of the local service and the stream description information corresponding to the local service.

In a feasible implementation, the transceiver 901 is further configured to: receive a local service selection policy that is generated based on the authorized local service and that is sent by the home network device, and send the local service selection policy to the UE; or
the processor 902 is further configured to generate a local service selection policy based on the authorized local service, and
the transceiver 901 is further configured to send the local service selection policy to the UE.

In another feasible implementation, a specific manner in which the transceiver 901 sends the local service selection policy to the UE may be:
sending the local service selection policy to a local network service device, for example, a local policy server, so that the local network service device forwards the local service selection policy to the UE; or sending the local service selection policy of the UE to an access node, so that the access node forwards the local service selection policy to the UE by using a radio air interface message; or directly sending the local service selection policy of the UE to the UE by using a NAS message.

Optionally, if the local service selection policy is generated by the home network device, after receiving the identifier of the authorized local service of the local network, the local network device 900 may store only a correspondence among the UE, a service provider identifier and/or a roaming consortium identifier, and the identifier of the authorized local service.

In a still another feasible implementation, the transceiver 901 is further configured to receive a second message sent by the UE, and the second message is used to request the UE to access a home network of the UE.

A specific manner in which the transceiver 901 sends the first message to the home network device is:
sending the first message to the home network device, where the first message carries the second message, so that the home network device authorizes, based on the second message and the characteristic information of the local network, the UE to access the home network.

It can be learned that in the local network device described in FIG. 8 and FIG. 9, in a roaming scenario, if there is no one-to-one roaming agreement between a service provider of the local network and a home operator, for example, the service provider and the home operator may be in a same roaming consortium, when the UE accesses the home network through the local network, the home network device may authorize the local service based on the subscription data of the UE and the local service information of the local network when the UE is authorized to access the home network, so that the UE can use a service of a visited location, to reduce load of the home network and improve network resource utilization. Further, the home network device sends the identifier of the authorized local service to the local network device, and the local network device generates the local service selection policy and sends the local service selection policy to the UE, so that the UE can initiate the local service, to avoid unnecessary information sending and improve communication resource utilization.

Based on the system architecture shown in FIG. 1, an embodiment of the present invention discloses UE. FIG. 10 is a schematic structural diagram of UE according to an embodiment of the present invention. UE 1000 described in FIG. 10 may be applied to the foregoing method embodiments. As shown in FIG. 10, the UE 100 may include a transceiver module 1001 and a processing module 1002.

The transceiver module 1001 is configured to send a request message to a local network device, where the request message is used to request the UE 1000 to access a home network of the UE 1000, so that after the local network device sends the request message and characteristic information of a local network to a home network device, the home network device authorizes, based on the request message and the characteristic information, the UE 1000 to access the home network, and authorizes a local service based on subscription data of the UE 1000 and local service information that is included in the characteristic information of the local network.

The transceiver module 1001 is further configured to receive a local service selection policy that is generated based on the authorized local service.

The request message may be an access request message. The characteristic information may further include a service provider identifier and/or a roaming consortium identifier of the local network; the local service information includes at least one of an identifier of the local service, a QoS parameter corresponding to the local service, a charging policy corresponding to the local service, and stream description information corresponding to the local service; and the local service selection policy includes an identifier of the authorized local service and stream description information corresponding to the authorized local service.

In a feasible implementation, a specific manner in which the transceiver module 1001 receives the local service selection policy that is generated based on the authorized local service may be:
receiving the local service selection policy that is generated based on the authorized local service and that is sent by the home network device; or receiving the local service selection policy that is generated based on the authorized local service and that is sent by the local network device after the local network device receives the identifier, sent by the home network device, of the authorized local service.

During specific implementation, after the local service of the local network is authorized, the home network device may generate the local service selection policy based on the authorized local service, and send the local service selection policy to the UE 1000; or the home network device may send the identifier of the authorized local service to the local network device, and the local network device generates the local service selection policy based on the authorized local service, and sends the local service selection policy to the UE 1000. This is not limited in this embodiment of the present invention.

In another feasible implementation, the processing module 1002 is configured to determine a requested local service from the local service selection policy.

The transceiver module 1001 is further configured to send a connection setup request message to the local network device, where the connection setup request message includes an identifier of the local service requested by the UE 1000, so that the local network device sets up a local service connection to the UE 1000 based on the identifier of the local service requested by the UE 1000 and the identifier of the authorized local service.

In still another feasible implementation, the processing module 1002 is further configured to: when the local service selection policy includes an identifier of a GW corresponding to the authorized local service, determine, from the local service selection policy, the requested local service and a GW corresponding to the local service requested by the UE 1000.

The transceiver module 1001 is further configured to send the connection setup request message to a serving gateway corresponding to the local service requested by the UE 1000, so that the GW sets up a secure channel connection to the UE 1000, and provides, for the UE 1000, a service of the local service requested by the UE 1000.

Based on the system architecture shown in FIG. 1, an embodiment of the present invention discloses another UE. FIG. 11 is a schematic structural diagram of another UE according to an embodiment of the present invention. UE 1100 described in FIG. 11 may be applied to the foregoing method embodiments. As shown in FIG. 11, the UE 1100 may include a transceiver 1101 and a processor 1102.

The transceiver 1101 is configured to send a request message to a local network device, where the request message is used to request the UE 1100 to access a home network of the UE 1100, so that after the local network device sends the request message and characteristic information of a local network to a home network device, the home network device authorizes, based on the request message and the characteristic information, the UE 1100 to access the home network, and authorizes a local service based on subscription data of the UE 1100 and local service information that is included in the characteristic information of the local network.

The transceiver 1101 is further configured to receive a local service selection policy that is generated based on the authorized local service.

The request message may be an access request message. The characteristic information may further include a service provider identifier and/or a roaming consortium identifier of the local network; the local service information includes at least one of an identifier of the local service, a QoS parameter corresponding to the local service, a charging policy corresponding to the local service, and stream description information corresponding to the local service; and the local service selection policy includes an identifier of the authorized local service and stream description information corresponding to the authorized local service.

In a feasible implementation, a specific manner in which the transceiver 1101 receives the local service selection policy that is generated based on the authorized local service may be:
receiving the local service selection policy that is generated based on the authorized local service and that is sent by the home network device; or receiving the local service selection policy that is generated based on the authorized local service and that is sent by the local network device after the local network device receives the identifier, sent by the home network device, of the authorized local service.

During specific implementation, after the local service of the local network is authorized, the home network device may generate the local service selection policy based on the authorized local service, and send the local service selection policy to the UE 1100; or the home network device may send the identifier of the authorized local service to the local network device, and the local network device generates the local service selection policy based on the authorized local service, and sends the local service selection policy to the UE 1100. This is not limited in this embodiment of the present invention.

In another feasible implementation, the processor 1102 is configured to determine a requested local service from the local service selection policy.

The transceiver 1101 is further configured to send a connection setup request message to the local network device, where the connection setup request message includes an identifier of the local service requested by the UE 1100, so that the local network device sets up a local service connection to the UE 1100 based on the identifier of the local service requested by the UE 1100 and the identifier of the authorized local service.

In still another feasible implementation, the processor 1102 is further configured to: when the local service selection policy includes an identifier of a GW corresponding to the authorized local service, determine, from the local service selection policy, the requested local service and a GW corresponding to the local service requested by the UE 1100.

The transceiver 1101 is further configured to send the connection setup request message to a serving gateway corresponding to the local service requested by the UE 1100, so that the GW sets up a secure channel connection to the UE 1100, and provides, for the UE 1100, a service of the local service requested by the UE 1100.

It can be learned that in the UE described in FIG. 10 and FIG. 11, in a roaming scenario, if there is no one-to-one roaming agreement between a service provider of the local network and a home operator, for example, the service provider and the home operator may be in a same roaming consortium, when the UE accesses the home network through the local network, the home network device may learn a local service type of the local network, to authorize the local service based on the subscription data of the UE and the local service information of the local network, so that the UE can use a service of a visited location, to reduce load of the home network and improve network resource utilization. Further, the UE may receive the local service selection policy that is generated based on the authorized local service, so that the UE can initiate the local service, to avoid unnecessary information sending and improve communication resource utilization.

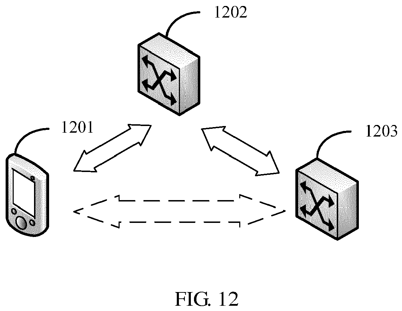

Based on the system architecture shown in FIG. 1, an embodiment of the present invention discloses a system for authorizing a local service. FIG. 12 is a schematic structural diagram of a system for authorizing a local service according to an embodiment of the present invention. As shown in FIG. 12, the system may include UE 1201, a local network device 1202, and a home network device 1203.

When the UE 1201 is initially attached to a home network, the UE may send a request message to the local network device 1202, to request to access the home network.

After receiving the request message of the UE 1201, the local network device 1202 may send the request message and characteristic information of a local network to the home network device 1203.

The home network device 1203 authorizes, based on information sent by the local network device 1202, the UE to access the home network through the local network, and when the UE is authorized to access the home network through the local network, obtains subscription data of the UE, and authorizes a local service based on the subscription data and local service information that is included in the characteristic information of the local network.

The characteristic information of the local network may further include a service provider identifier and/or a roaming consortium identifier of the local network; the local service information includes at least one of an identifier of the local service, a QoS parameter corresponding to the local service, a charging policy corresponding to the local service, and stream description information corresponding to the local service; and a local service selection policy includes an identifier of the authorized local service and stream description information corresponding to the authorized local service.

Optionally, the local service information may further include stream description information corresponding to the local service.

In addition, when the local service is authorized, the home network device 1203 may further send the identifier of the authorized local service, for example, a service type, an application name, and/or an APN, to the local network device 1202, and the local network device 1202 stores a correspondence among the UE 1201, the service provider identifier and/or the roaming consortium identifier, and the identifier of the authorized local service.

Further, when the local service is authorized, the home network device 1203 may generate the local service selection policy based on the authorized local service, and send the local service selection policy to the UE 1201. Alternatively, the local network device may generate the local service selection policy based on the authorized local service, and send the local service selection policy to the UE 1201. This is not limited in this embodiment of the present invention.

After receiving the local service selection policy, the UE 1201 may send a connection setup request message to the local network device 1202 based on the local service selection policy, and the local network device 1202 may set up a local service connection to the UE based on the stored identifier of the authorized local service.

It can be learned that in the system described in FIG. 12, in a roaming scenario, if there is no one-to-one roaming agreement between a service provider of the local network and a home operator, for example, the service provider and the home operator may be in a same roaming consortium, when the UE accesses the home network through the local network, the home network device may learn a local service type of the local network, to authorize the local service based on the subscription data of the UE and the local service information of the local network, so that the UE can use a service of a visited location, to reduce load of the home network and improve network resource utilization. Further, the UE may receive the local service selection policy that is generated based on the authorized local service, so that the UE can initiate the local service, to avoid unnecessary information sending and improve communication resource utilization.

It should be noted that, in the foregoing embodiments, the descriptions of the embodiments have respective focuses. For a part that is not described in detail in an embodiment, refer to related descriptions in other embodiments. In addition, a person skilled in the art should also appreciate that all the embodiments described in this specification are example embodiments, and the related actions and modules are not necessarily mandatory to the present invention.

Steps in the method in the embodiments of the present invention may be adjusted, combined, or deleted according to an actual requirement.

The modules of the home network device, the local network device, and the UE in the embodiments of the present invention may be combined, divided, or deleted based on actual needs.

The home network device, the local network device, and the UE in the embodiments of the present invention may be implemented by using a universal integrated circuit, for example, a CPU (Central Processing Unit, central processing unit) or an ASIC (Application-Specific Integrated Circuit, application-specific integrated circuit).

A person of ordinary skill in the art may understand that all or some of the processes of the methods in the embodiments may be implemented by a computer program instructing related hardware. The program may be stored in a computer readable storage medium. When the program runs, the processes of the methods in the embodiments may be performed. The foregoing storage medium may include a magnetic disk, an optical disc, a read-only memory (Read-Only Memory, ROM), or a random access memory (Random Access Memory, RAM).

The foregoing describes in detail the method for authorizing a local service, the related device, and the system that are disclosed in the embodiments of the present invention. In this specification, specific examples are used to describe the principle and implementations of the present invention, and the descriptions of the embodiment are only intended to help understand the method and core idea of the present invention. Meanwhile, a person of ordinary skill in the art may, based on the idea of the present invention, make modifications with respect to the specific implementations within the scope of the appended claims. Therefore, the content of this specification shall not be construed as a limitation to the present invention, the scope of which is defined by the appended claims.

## Claims

1. A method for authorizing a local service when there is no one-to-one roaming agreement between a service provider of a local network and a home network, wherein the method is applied to an evolved packet system EPS, and is executed by a home network device, and comprises:
receiving (203), by a home network device, a first message sent by a local network device, wherein the first message comprises characteristic information of the local network wherein the first message carries a second message sent by a UE to the local network device wherein the second message is used to request to access the home network of the UE, and the characteristic information comprises local service information and at least one of a service provider identifier and a roaming consortium identifier of the local network;
obtaining (203), by the home network device, subscription data of the UE based on at least one of the service provider identifier and the roaming consortium identifier, and authorizing the UE to access a home network based on subscription data of the UE and the characteristic information of the local network;
obtaining (204), by the home network device, subscription data of UE, and authorizing a local service based on the subscription data and the local service information when the UE is authorized to access the home network; and
sending (205), by the home network device, an identifier of the authorized local service to the local network device.

2. The method according to claim 1, wherein
when the home network device is a control plane network element, the obtaining, by the home network device, the subscription data of the UE based on at least one of the service provider identifier and the roaming consortium identifier comprises:
obtaining, by the control plane network element, the subscription data of the UE from a home subscriber server HSS, wherein the subscription data comprises service information corresponding to the at least one of the service provider identifier and the roaming consortium identifier; or
when the home network device is an HSS, the obtaining, by the home network device, the subscription data of the UE based on at least one of the service provider identifier and the roaming consortium identifier comprises:
obtaining, by the HSS, the subscription data of the UE from a local database, wherein the subscription data comprises service information corresponding to the at least one of the service provider identifier and the roaming consortium identifier.

3. The method according to any one of claims 1 to 2, wherein the service information includes at least an identifier of a service and the local service information includes at least an identifier of the local service, and the authorizing, by the home network device, a local service based on the subscription data and the local service information comprises:
determining, by the home network device, whether the local service information matches the service information; and
if the local service information matches the service information, determining, by the home network device, that the local service is authorized; or if the local service information does not match the service information, determining, by the home network device, that the local service fails to be authorized.

4. A method for authorizing a local service when there is no one-to-one roaming agreement between a service provider of a local network and a home network, wherein the method is applied to an EPS, is executed by a local network device, and comprises:
sending (302), by a local network device, a first message to a home network device after receiving a second message sent by a UE to the local network device wherein the second message is used to request to access a home network of the UE, wherein the first message comprises characteristic information of a local network, and the characteristic information comprises local service information and at least one of a service provider identifier and a roaming consortium identifier of the local network, wherein the first message carries the second message sent by UE;
receiving (308), by the local network device, an identifier of an authorized local service, wherein the identifier of the authorized local service is sent to the local network device when the local service is authorized by the home network device; and
setting up (311), by the local network device, a local service connection to the UE based on the identifier of the authorized local service when the UE initiates the local service.

5. The method according to claim 4, wherein the method further comprises:
receiving, by the local network device, a local service selection policy that is generated based on the authorized local service and that is sent by the home network device, and sending the local service selection policy to the UE; or
generating, by the local network device, a local service selection policy based on the authorized local service, and sending the local service selection policy to the UE; wherein the local service selection policy includes the identifier of the authorized local service and stream description information corresponding to the authorized local service.

6. A home network device (600), wherein the home network device is applied to an EPS when there is no one-to-one roaming agreement between a service provider of a local network and a home network, and comprises:
a transceiver module (601), configured to receive a first message sent by a local network device, wherein the first message comprises characteristic information of the local network, and the characteristic information comprises local service information and at least one of a service provider identifier and a roaming consortium identifier of the local network, wherein the first message carries a second message sent by UE to the local network device wherein the second message is used to request to access the home network of the UE; and
a processing module (602), configured to: obtain subscription data of UE subscription data of the UE based on at least one of the service provider identifier and the roaming consortium identifier, and authorize a local service based on the subscription data and the local service information; wherein the transceiver module is further configured to send an identifier of the authorized local service to the local network device.

7. The home network device according to claim 6, wherein when the home network device is a control plane network element, a specific manner in which the processing module obtains the subscription data of the UE based on the at least one of the service provider identifier and the roaming consortium identifier is:
obtaining the subscription data of the UE from an HSS, wherein the subscription data comprises service information corresponding to the at least one of the service provider identifier and the roaming consortium identifier; or
when the home network device is the HSS, a specific manner m which the processing module obtains the subscription data of the UE based on the at least one of the service provider identifier and the roaming consortium identifier is:
obtaining the subscription data of the UE from a local database, wherein the subscription data comprises service information corresponding to the at least one of the service provider identifier and the roaming consortium identifier.

8. The home network device according to any one of claims 6 to 9, wherein a specific manner in which the processing module authorizes the local service based on the subscription data and the local service information is:
determining whether the local service information matches the service information; and if the local service information matches the service information, determining that the local service is authorized; or if the local service information
does not match the service information, determining that the local service fails to be authorized,
wherein the service information comprises at least one of an identifier of a service, a quality of service parameter threshold condition, and a charging policy of the service; and the local service information comprises at least one of an identifier of the local service, a quality of service parameter of the local service, and a charging policy of the local service; and
a specific manner in which the processing module determines whether the local service information matches the service information is at least one of the following:
determining whether the identifier of the service comprises the identifier of the local service; and if the identifier of the service comprises the identifier of the local service, determining that the local service information matches the service information; or if the identifier of the service does not comprise the identifier of the local service, determining that the local service information does not match the service information;
determining whether the quality of service parameter of the local service meets the quality of service parameter threshold condition; and if the quality of service parameter meets the quality of service parameter threshold condition, determining that the local service information matches the service information; or if the quality of service parameter does not meet the quality of service parameter threshold condition, determining that the local service information does not match the service information; and
determining whether the charging policy of the local service matches the charging policy of the service; and if the charging policy of the local service matches the charging policy of the service, determining that the local service information matches the service information; or if the charging policy of the local service does not match the charging policy of the service, determining that the local service information does not match the service information.

9. A local network device (808), wherein the local network device is applied to an EPS when there is no one-to-one roaming agreement between a service provider of a local network and a home network, and comprises:
a transceiver module (801), configured to send a first message to a home network device, wherein the first message comprises characteristic information of the local network, and the characteristic information comprises local service information and at least one of a service provider identifier and a roaming consortium identifier of the local network, wherein the first message carries a second message sent by UE wherein the second message is used to request to access the home network of the UE, wherein
the transceiver module (802) is further configured to receive an identifier of an authorized local service, wherein the identifier of the authorized local service is sent to the local network device when the local service is authorized by the home network device based on subscription data of UE and the local service information; and
a processing module (803), configured to set up a local service connection to the UE based on the identifier of the authorized local service when the UE initiates the local service.

10. The local network device according to claim 9, wherein
the transceiver module is further configured to: receive a local service selection policy that is generated based on the authorized local service and that is sent by the home network device, and send the local service selection policy to the UE; or
the processing module is further configured to generate a local service selection policy based on the authorized local service, and
the transceiver module is further configured to send the local service selection policy to the UE; wherein the local service selection policy includes the identifier of the authorized local service and stream description information corresponding to the authorized local service.

## Patentansprüche

1. Verfahren zum Autorisieren eines lokalen Dienstes, wenn keine Eins-zu-eins-Roaming-Vereinbarung zwischen einem Dienstanbieter eines lokalen Netzwerks und einem Heimnetzwerk vorhanden ist, wobei das Verfahren auf ein Evolved Packet System (EPS) angewendet wird und
von einer Heimnetzwerkvorrichtung ausgeführt wird und Folgendes umfasst:
Empfangen (203), durch eine Heimnetzwerkvorrichtung, einer ersten Nachricht, die durch eine lokale Netzwerkvorrichtung gesendet wurde, wobei die erste Nachricht charakteristische Informationen des lokalen Netzwerks umfasst, wobei die erste Nachricht eine zweite Nachricht trägt, die durch eine UE an die lokale Netzwerkvorrichtung gesendet wurde, wobei die zweite Nachricht verwendet wird, um Zugriff auf das Heimnetzwerk der UE anzufordern, und die charakteristischen Informationen lokale Dienstinformationen und mindestens eine von einer Dienstanbieterkennung und einer Roaming-Consortium-Kennung des lokalen Netzwerks umfassen;
Erhalten (203), durch die Heimnetzwerkvorrichtung, von Teilnahmedaten der UE basierend auf mindestens einer von der Dienstanbieterkennung und der Roaming-Consortium-Kennung und Autorisieren der UE, um auf ein Heimnetzwerk zuzugreifen, basierend auf Teilnahmedaten der UE und den charakteristischen Informationen des lokalen Netzwerks;
Erhalten (204), durch die Heimnetzwerkvorrichtung, von Teilnahmedaten der UE und Autorisieren eines lokalen Dienstes basierend auf den Teilnahmedaten und den lokalen Dienstinformationen, wenn die UE dazu autorisiert ist, auf das Heimnetzwerk zuzugreifen; und
Senden (205), durch die Heimnetzwerkvorrichtung, einer Kennung des autorisierten lokalen Dienstes an die lokale Netzwerkvorrichtung.

2. Verfahren nach Anspruch 1, wobei
wenn die Heimnetzwerkvorrichtung ein Steuerebenen-Netzwerkelement ist, das Erhalten, durch die Heimnetzwerkvorrichtung, der Teilnahmedaten der UE basierend auf mindestens einer von der Dienstanbieterkennung und der Roaming-Consortium-Kennung Folgendes umfasst:
Erhalten, durch das Steuerebenen-Netzwerkelement, der Teilnahmedaten der UE von einem Home Subscriber Server (HSS), wobei die Teilnahmedaten Dienstinformationen umfassen, die der mindestens einen von der Dienstanbieterkennung und der Roaming-Consortium-Kennung entsprechen; oder
wenn die Heimnetzwerkvorrichtung ein HSS ist, das Erhalten, durch die Heimnetzwerkvorrichtung, der Teilnahmedaten der UE basierend auf mindestens einer von der Dienstanbieterkennung und der Roaming-Consortium-Kennung Folgendes umfasst:
Erhalten, durch den HSS, der Teilnahmedaten der UE von einer lokalen Datenbank, wobei die Teilnahmedaten Dienstinformationen umfassen, die der mindestens einen von der Dienstanbieterkennung und der Roaming-Consortium-Kennung entsprechen.

3. Verfahren nach einem der Ansprüche 1 bis 2, wobei die Dienstinformationen mindestens eine Kennung eines Dienstes beinhalten und die lokalen Dienstinformationen mindestens eine Kennung des lokalen Dienstes beinhalten und das Autorisieren, durch die Heimnetzwerkvorrichtung, eines lokalen Dienstes basierend auf den Teilnahmedaten und den lokalen Dienstinformationen Folgendes umfasst:
Bestimmen, durch die Heimnetzwerkvorrichtung, ob die lokalen Dienstinformationen mit den Dienstinformationen übereinstimmen; und
wenn die lokalen Dienstinformationen mit den Dienstinformationen übereinstimmen, Bestimmen, durch die Heimnetzwerkvorrichtung, dass der lokale Dienst autorisiert ist; oder, wenn die lokalen Dienstinformationen nicht mit den Dienstinformationen übereinstimmen, Bestimmen, durch die Heimnetzwerkvorrichtung, dass der lokale Dienst nicht autorisiert werden kann.

4. Verfahren zum Autorisieren eines lokalen Dienstes, wenn keine Eins-zu-eins-Roaming-Vereinbarung zwischen einem Dienstanbieter eines lokalen Netzwerks und einem Heimnetzwerk vorhanden ist, wobei das Verfahren auf ein EPS angewendet wird, das durch eine lokale Netzwerkvorrichtung ausgeführt wird, und Folgendes umfasst:
Senden (302), durch eine lokale Netzwerkvorrichtung, einer ersten Nachricht an eine Heimnetzwerkvorrichtung nach Empfangen einer zweiten Nachricht, die durch eine UE an die lokale Netzwerkvorrichtung gesendet wurde, wobei die zweite Nachricht verwendet wird, um Zugriff auf ein Heimnetzwerk der UE anzufordern, wobei die erste Nachricht charakteristische Informationen eines lokalen Netzwerks umfasst und die charakteristischen Informationen lokale Dienstinformationen und mindestens eine von einer Dienstanbieterkennung und einer Roaming-Consortium-Kennung des lokalen Netzwerk umfassen, wobei die erste Nachricht die zweite Nachricht, die durch die UE gesendet wurde, trägt;
Empfangen (308), durch die lokale Netzwerkvorrichtung, einer Kennung eines autorisierten lokalen Dienstes, wobei die Kennung des autorisierten lokalen Dienstes an die lokale Netzwerkvorrichtung gesendet wird, wenn der lokale Dienst durch die Heimnetzwerkvorrichtung autorisiert wird; und
Aufbauen (311), durch die lokale Netzwerkvorrichtung, einer lokalen Dienstverbindung zu der UE basierend auf der Kennung des autorisierten lokalen Dienstes, wenn die UE den lokalen Dienst initiiert.

5. Verfahren nach Anspruch 4, wobei das Verfahren ferner Folgendes umfasst:
Empfangen, durch die lokale Netzwerkvorrichtung, einer lokalen Dienstauswahlrichtlinie, die basierend auf dem autorisierten lokalen Dienst erzeugt wird und die von der Heimnetzwerkvorrichtung gesendet wird, und Senden der lokalen Dienstauswahlrichtlinie an die UE; oder
Erzeugen, durch die lokale Netzwerkvorrichtung, einer lokalen Dienstauswahlrichtlinie basierend auf dem autorisierten lokalen Dienst und Senden der lokalen Dienstauswahlrichtlinie an die UE; wobei die lokale Dienstauswahlrichtlinie die Kennung des autorisierten lokalen Dienstes und Stream-Beschreibungsinformationen entsprechend dem autorisierten lokalen Dienst beinhaltet.

6. Heimnetzwerkvorrichtung (600), wobei die Heimnetzwerkvorrichtung auf ein EPS angewendet wird, wenn keine Eins-zu-eins-Roaming-Vereinbarung zwischen einem Dienstanbieter eines lokalen Netzwerks und einem Heimnetzwerk vorhanden ist, und Folgendes umfasst:
ein Transceiver-Modul (601), das dazu konfiguriert ist, eine erste Nachricht zu empfangen, die durch eine lokale Netzwerkvorrichtung gesendet wurde, wobei die erste Nachricht charakteristische Informationen eines lokalen Netzwerks umfasst und die charakteristischen Informationen lokale Dienstinformationen und mindestens eine von einer Dienstanbieterkennung und einer Roaming-Consortium-Kennung des lokalen Netzwerk umfassen, wobei die erste Nachricht eine zweite Nachricht trägt, die durch eine UE an die lokale Netzwerkvorrichtung gesendet wurde, wobei die zweite Nachricht verwendet wird, um Zugriff auf das Heimnetzwerk der UE anzufordern; und
ein Verarbeitungsmodul (602), das konfiguriert ist zum: Erhalten von Teilnahmedaten von UE-Teilnahmedaten der UE basierend auf mindestens einer von der Dienstanbieterkennung und der Roaming-Consortium-Kennung und Autorisieren eines lokalen Dienstes basierend auf den Teilnahmedaten und den lokalen Dienstinformationen; wobei das Transceiver-Modul ferner dazu konfiguriert ist, eine Kennung des autorisierten lokalen Dienstes an die lokale Netzwerkvorrichtung zu senden.

7. Heimnetzwerkvorrichtung nach Anspruch 6, wobei
wenn die Heimnetzwerkvorrichtung ein Steuerebenen-Netzwerkelement ist, eine spezifische Weise, auf die das Verarbeitungsmodul die Teilnahmedaten der UE basierend auf der mindestens einen von der Dienstanbieterkennung und/oder der Roaming-Consortium-Kennung erhält, wie folgt ist:
Erhalten der Teilnahmedaten der UE von einem HSS, wobei die Teilnahmedaten Dienstinformationen umfassen, die der mindestens einen von der Dienstanbieterkennung und der Roaming-Consortium-Kennung entsprechen; oder
wenn die Heimnetzwerkvorrichtung ein HSS ist, eine spezifische Weise, auf die das Verarbeitungsmodul die Teilnahmedaten der UE basierend auf der mindestens einen von der Dienstanbieterkennung und/oder der Roaming-Consortium-Kennung erhält, wie folgt ist:
Erhalten der Teilnahmedaten der UE von einer lokalen Datenbank, wobei die Teilnahmedaten Dienstinformationen umfassen, die der mindestens einen von der Dienstanbieterkennung und der Roaming-Consortium-Kennung entsprechen.

8. Heimnetzwerkvorrichtung nach einem der Ansprüche 6 bis 9, wobei eine spezifische Weise, auf die das Verarbeitungsmodul den lokalen Dienst basierend auf den Teilnahmedaten und den lokalen Dienstinformationen autorisiert, wie folgt ist:
Bestimmen, ob die lokalen Dienstinformationen mit den Dienstinformationen übereinstimmen; und, wenn die lokalen Dienstinformationen mit den Dienstinformationen übereinstimmen, Bestimmen, dass der lokale Dienst autorisiert ist; oder, wenn die lokalen Dienstinformationen nicht mit den Dienstinformationen übereinstimmen, Bestimmen, dass der lokale Dienst nicht autorisiert werden kann,
wobei die Dienstinformationen mindestens eines von einer Kennung eines Dienstes, einer Dienstgüteparameter-Schwellenbedingung und einer Gebührenrichtlinie des Dienstes umfassen; und die lokalen Dienstinformationen mindestens eines von einer Kennung des lokalen Dienstes, einem Dienstgüteparameter des lokalen Dienstes und einer Gebührenrichtlinie des lokalen Dienstes umfassen; und
eine spezifische Weise, auf die das Verarbeitungsmodul bestimmt, ob die lokalen Dienstinformationen mit den Dienstinformationen übereinstimmen, mindestens eine der folgenden ist:
Bestimmen, ob die Kennung des Dienstes die Kennung des lokalen Dienstes umfasst; und, wenn die Kennung des Dienstes die Kennung des lokalen Dienstes umfasst, Bestimmen, dass die lokalen Dienstinformationen mit den Dienstinformationen übereinstimmen; oder, wenn die Kennung des Dienstes nicht die Kennung des lokalen Dienstes umfasst, Bestimmen, dass die lokalen Dienstinformationen nicht mit den Dienstinformationen übereinstimmen;
Bestimmen, ob der Dienstgüteparameter des lokalen Dienstes die Dienstgüteparameter-Schwellenbedingung erfüllt; und, wenn der Dienstgüteparameter die Dienstgüteparameter-Schwellenbedingung erfüllt, Bestimmen, dass die lokalen Dienstinformationen mit den Dienstinformationen übereinstimmen; oder, wenn der Dienstgüteparameter die Dienstgüteparameter-Schwellenbedingung nicht erfüllt, Bestimmen, dass die lokalen Dienstinformationen nicht mit den Dienstinformationen übereinstimmen; und
Bestimmen, ob die Gebührenrichtlinie des lokalen Dienstes mit der Gebührenrichtlinie des Dienstes übereinstimmt; und, wenn die Gebührenrichtlinie des lokalen Dienstes mit der Gebührenrichtlinie des Dienstes übereinstimmt, Bestimmen, dass die lokalen Dienstinformationen mit den Dienstinformationen übereinstimmen; oder, wenn die Gebührenrichtlinie des lokalen Dienstes nicht mit der Gebührenrichtlinie des Dienstes übereinstimmt, Bestimmen, dass die lokalen Dienstinformationen nicht mit den Dienstinformationen übereinstimmen.

9. Lokale Netzwerkvorrichtung (808), wobei die lokale Netzwerkvorrichtung auf ein EPS angewendet wird, wenn keine Eins-zu-eins-Roaming-Vereinbarung zwischen einem Dienstanbieter eines lokalen Netzwerks und einem Heimnetzwerk vorhanden ist, und Folgendes umfasst:
ein Transceiver-Modul (801), das dazu konfiguriert ist, eine erste Nachricht an eine Heimnetzwerkvorrichtung zu senden, wobei die erste Nachricht charakteristische Informationen des lokalen Netzwerks umfasst, und die charakteristischen Informationen lokale Dienstinformationen und mindestens eine von einer Dienstanbieterkennung und einer Roaming-Consortium-Kennung des lokalen Netzwerk umfassen, wobei die erste Nachricht eine zweite Nachricht trägt, die durch eine UE gesendet wurde, wobei die zweite Nachricht verwendet wird, um Zugriff auf das Heimnetzwerk der UE anzufordern, wobei
das Transceiver-Modul (802) ferner dazu konfiguriert ist, eine Kennung eines autorisierten lokalen Dienstes zu empfangen, wobei die Kennung des autorisierten lokalen Dienstes an die lokale Netzwerkvorrichtung gesendet wird, wenn der lokale Dienst durch die Heimnetzwerkvorrichtung basierend auf Teilnahmedaten der UE und den lokalen Dienstinformationen autorisiert wird; und ein Verarbeitungsmodul (803), das dazu konfiguriert ist, eine lokale Dienstverbindung mit der UE basierend auf der Kennung des autorisierten lokalen Dienstes aufzubauen, wenn die UE den lokalen Dienst initiiert.

10. Lokale Netzwerkvorrichtung nach Anspruch 9, wobei
das Transceiver-Modul ferner konfiguriert ist zum: Empfangen einer lokalen Dienstauswahlrichtlinie, die basierend auf dem autorisierten lokalen Dienst erzeugt wird und die von der Heimnetzwerkvorrichtung gesendet wird, und Senden der lokalen Dienstauswahlrichtlinie an die UE; oder
das Verarbeitungsmodul ferner konfiguriert ist zum Erzeugen einer lokalen Dienstauswahlrichtlinie basierend auf dem autorisierten lokalen Dienst, und
das Transceiver-Modul ferner konfiguriert ist zum Senden der lokalen Dienstauswahlrichtlinie an die UE; wobei die lokale Dienstauswahlrichtlinie die Kennung des autorisierten lokalen Dienstes und Stream-Beschreibungsinformationen entsprechend dem autorisierten lokalen Dienst beinhaltet.

## Revendications

1. Procédé d'autorisation d'un service local en l'absence d'accord d'itinérance biunivoque entre un fournisseur de services d'un réseau local et d'un réseau domestique, dans lequel le procédé est appliqué à un système de paquets évolué EPS, et est exécuté par un dispositif
de réseau domestique, et comprend :
la réception (203), par un dispositif de réseau domestique, d'un premier message envoyé par un dispositif de réseau local, dans lequel le premier message comprend des informations caractéristiques du réseau local dans lequel le premier message contient un second message envoyé par un UE au dispositif de réseau local, dans lequel le second message est utilisé pour demander à accéder au réseau domestique de l'UE, et les informations caractéristiques comprennent des informations de service local et au moins un d'un identifiant de fournisseur de services et d'un identifiant de consortium d'itinérance du réseau local ;
l'obtention (203), par le dispositif de réseau domestique, de données d'abonnement de l'UE sur la base d'au moins un de l'identifiant de fournisseur de services et de l'identifiant de consortium d'itinérance, et le fait d'autoriser l'UE à accéder à un réseau domestique sur la base de données d'abonnement de l'UE et des informations caractéristiques du réseau local ;
l'obtention (204), par le dispositif de réseau domestique, de données d'abonnement de l'UE, et l'autorisation d'un service local sur la base des données d'abonnement et des informations de service local lorsque l'UE est autorisé à accéder au réseau domestique ; et
l'envoi (205), par le dispositif de réseau domestique, d'un identifiant du service local autorisé au dispositif de réseau local.

2. Procédé selon la revendication 1, dans lequel
lorsque le dispositif de réseau domestique est un élément de réseau de plan de commande, l'obtention, par le dispositif de réseau domestique, des données d'abonnement de l'UE sur la base d'au moins un de l'identifiant de fournisseur de services et de l'identifiant de consortium d'itinérance comprend :
l'obtention, par l'élément de réseau de plan de commande, des données d'abonnement de l'UE à partir d'un serveur d'abonné domestique HSS, dans lequel les données d'abonnement comprennent des informations de service correspondant à l'au moins un de l'identifiant de fournisseur de services et de l'identifiant de consortium d'itinérance ; ou
lorsque le dispositif de réseau domestique est un HSS, l'obtention, par le dispositif de réseau domestique, des données d'abonnement de l'UE sur la base d'au moins un de l'identifiant de fournisseur de services et de l'identifiant de consortium d'itinérance comprend :
l'obtention, par le HSS, des données d'abonnement de l'UE à partir d'une base de données locale, dans lequel les données d'abonnement comprennent des informations de service correspondant à l'au moins un de l'identifiant de fournisseur de services et de l'identifiant de consortium d'itinérance.

3. Procédé selon l'une quelconque des revendications 1 à 2, dans lequel les informations de service comportent au moins un identifiant d'un service et les informations de service local comportent au moins un identifiant du service local, et l'autorisation, par le dispositif de réseau domestique, d'un service local sur la base des données d'abonnement et des informations de service local comprend :
le fait de déterminer, par le biais du dispositif de réseau domestique, si les informations de service local correspondent aux informations de service ; et
si les informations de service local correspondent aux informations de service, le fait de déterminer, par le biais du dispositif de réseau domestique, que le service local est autorisé ; ou si les informations de service local ne correspondent pas aux informations de service, le fait de déterminer, par le biais du dispositif de réseau domestique, que le service local n'est pas autorisé.

4. Procédé d'autorisation d'un service local en l'absence d'accord d'itinérance biunivoque entre un fournisseur de services d'un réseau local et d'un réseau domestique, dans lequel le procédé est appliqué à un EPS, est exécuté par un dispositif de réseau local, et comprend :
l'envoi (302), par un dispositif de réseau local, d'un premier message à un dispositif de réseau domestique après la réception d'un second message envoyé par un UE au dispositif de réseau local, dans lequel le second message est utilisé pour demander à accéder à un réseau domestique de l'UE, dans lequel le premier message comprend des informations caractéristiques d'un réseau local, et les informations caractéristiques comprennent des informations de service local et au moins un d'un identifiant de fournisseur de services et d'un identifiant de consortium d'itinérance du réseau local, dans lequel le premier message contient le second message envoyé par l'UE ;
la réception (308), par le dispositif de réseau local, d'un identifiant d'un service local autorisé, dans lequel l'identifiant du service local autorisé est envoyé au dispositif de réseau local lorsque le service local est autorisé par le dispositif de réseau domestique ; et
l'établissement (311), par le dispositif de réseau local, d'une connexion de service local à l'UE sur la base de l'identifiant du service local autorisé lorsque l'UE démarre le service local.

5. Procédé selon la revendication 4, dans lequel le procédé comprend en outre :
la réception, par le dispositif de réseau local, d'une politique de sélection de service local qui est générée sur la base du service local autorisé et qui est envoyée par le dispositif de réseau domestique, et l'envoi de la politique de sélection de service local à l'UE ; ou
la génération, par le dispositif de réseau local, d'une politique de sélection de service local sur la base du service local autorisé, et l'envoi de la politique de sélection de service local à l'UE ; dans lequel la politique de sélection de service local comporte l'identifiant du service local autorisé et des informations de description de flux correspondant au service local autorisé.

6. Dispositif de réseau domestique (600), dans lequel le dispositif de réseau domestique est appliqué à un EPS en l'absence d'accord d'itinérance biunivoque entre un fournisseur de services d'un réseau local et d'un réseau domestique, et comprend :
un module émetteur-récepteur (601), configuré pour recevoir un premier message envoyé par un dispositif de réseau local, dans lequel le premier message comprend des informations caractéristiques d'un réseau local, et les informations caractéristiques comprennent des informations de service local et au moins un d'un identifiant de fournisseur de services et d'un identifiant de consortium d'itinérance du réseau local, dans lequel le premier message contient un second message envoyé par l'UE au dispositif de réseau local dans lequel le second message est utilisé pour demander à accéder au réseau domestique de l'UE ; et
un module de traitement (602), configuré pour : obtenir des données d'abonnement de l'UE sur la base d'au moins un de l'identifiant de fournisseur de services et de l'identifiant de consortium d'itinérance, et autoriser un service local sur la base des données d'abonnement et des informations de service local ; dans lequel le module émetteur-récepteur est en outre configuré pour envoyer un identifiant du service local autorisé au dispositif de réseau local.

7. Dispositif de réseau domestique selon la revendication 6, dans lequel
lorsque le dispositif de réseau domestique est un élément de réseau de plan de commande, une manière spécifique dont le module de traitement obtient les données d'abonnement de l'UE sur la base de l'au moins un de l'identifiant de fournisseur de services et l'identifiant de consortium d'itinérance est :
l'obtention des données d'abonnement de l'UE à partir d'un HSS, dans lequel les données d'abonnement comprennent des informations de service correspondant à l'au moins un de l'identifiant de fournisseur de services et de l'identifiant de consortium d'itinérance ; ou
lorsque le dispositif de réseau domestique est le HSS, une manière spécifique dont le module de traitement obtient les données d'abonnement de l'UE sur la base de l'au moins un de l'identifiant de fournisseur de services et l'identifiant de consortium d'itinérance est :
l'obtention des données d'abonnement de l'UE à partir d'une base de données locale, dans lequel les données d'abonnement comprennent des informations de service correspondant à l'au moins un de l'identifiant de fournisseur de services et de l'identifiant de consortium d'itinérance.

8. Dispositif de réseau domestique selon l'une quelconque des revendications 6 à 9, dans lequel une manière spécifique dont le module de traitement autorise le service local sur la base des données d'abonnement et des informations de service local est :
le fait de déterminer si les informations de service local correspondent aux informations de service ; et si les informations de service local correspondent aux informations de service, le fait de déterminer que le service local est autorisé ; ou si les informations de service local ne correspondent pas aux informations de service, le fait de déterminer que le service local n'est pas autorisé,
dans lequel les informations de service comprennent au moins un d'un identifiant d'un service, d'une condition de seuil de paramètre de qualité de service et d'une politique de facturation du service ; et les informations de service local comprennent au moins un d'un identifiant du service local, d'un paramètre de qualité de service du service local et d'une politique de facturation du service local ; et
une manière spécifique dont le module de traitement détermine si les informations de service local correspondent aux informations de service est au moins un de ce qui suit :
déterminer si l'identifiant du service comprend l'identifiant du service local ; et si l'identifiant du service comprend l'identifiant du service local, déterminer que les informations de service local correspondent aux informations de service ; ou si l'identifiant du service ne comprend pas l'identifiant du service local, déterminer que les informations de service local ne correspondent pas aux informations de service ;
déterminer si le paramètre de qualité de service du service local satisfait la condition de seuil de paramètre de qualité de service ; et si le paramètre de qualité de service satisfait la condition de seuil de paramètre de qualité de service, déterminer que les informations de service local correspondent aux informations de service ; ou si le paramètre de qualité de service ne satisfait pas la condition de seuil de paramètre de qualité de service, déterminer que les informations de service local ne correspondent pas aux informations de service ; et
déterminer si la politique de facturation du service local correspond à la politique de facturation du service ; et si la politique de facturation du service local correspond à la politique de facturation du service, déterminer que les informations de service local correspondent aux informations de service ; ou si la politique de facturation du service local ne correspond pas à la politique de facturation du service, déterminer que les informations de service local ne correspondent pas aux informations de service.

9. Dispositif de réseau local (808), dans lequel le dispositif de réseau local est appliqué à un EPS en l'absence d'accord d'itinérance biunivoque entre un fournisseur de services d'un réseau local et d'un réseau domestique, et comprend :
un module émetteur-récepteur (801) configuré pour envoyer un premier message à un dispositif de réseau domestique, dans lequel le premier message comprend des informations caractéristiques du réseau local, et les informations caractéristiques comprennent des informations de service local et au moins un d'un identifiant de fournisseur de services et d'un identifiant de consortium d'itinérance du réseau local, dans lequel le premier message contient un second message envoyé par l'UE dans lequel le second message est utilisé pour demander à accéder au réseau domestique de l'UE, dans lequel
le module émetteur-récepteur (802) est en outre configuré pour recevoir un identifiant d'un service local autorisé, dans lequel l'identifiant du service local autorisé est envoyé au dispositif de réseau local lorsque le service local est autorisé par le dispositif de réseau domestique sur la base de données d'abonnement de l'UE et des informations de service local ; et un module de traitement (803), configuré pour établir une connexion de service local à l'UE sur la base de l'identifiant du service local autorisé lorsque l'UE démarre le service local.

10. Dispositif de réseau local selon la revendication 9, dans lequel
le module émetteur-récepteur est en outre configuré pour : recevoir une politique de sélection de service local qui est générée sur la base du service local autorisé et qui est envoyée par le dispositif de réseau domestique, et envoyer la politique de sélection de service local à l'UE ; ou
le module de traitement est en outre configuré pour générer une politique de sélection de service local sur la base du service local autorisé, et
le module émetteur-récepteur est en outre configuré pour envoyer la politique de sélection de service local à l'UE ; dans lequel la politique de sélection de service local comporte l'identifiant du service local autorisé et des informations de description de flux correspondant au service local autorisé.
